(19) Europäisches Patentamt
European Patent Office
Office européen des brevets

(11) Publication number: 0 656 412 A1

(12) **EUROPEAN PATENT APPLICATION published in accordance with Art. 158(3) EPC**

(21) Application number: **94906780.5**

(22) Date of filing: **06.08.93**

(86) International application number: **PCT/JP93/01106**

(87) International publication number: **WO 94/03558 (17.02.94 94/05)**

(51) Int. Cl.6: **C09K 19/42**, C09K 19/08

(30) Priority: **06.08.92 JP 229380/92**

(43) Date of publication of application: **07.06.95 Bulletin 95/23**

(84) Designated Contracting States: **GB**

(71) Applicant: **CHISSO CORPORATION**
**6-32, Nakanoshima 3-chome, Kita-ku**
**Osaka-shi, Osaka-fu 530 (JP)**

(72) Inventor: **TAKESHITA, Fusayuki 1796-10-720, Ohmaya**
**Ichihara-shi**
**Chiba 290 (JP)**
Inventor: **HIROSE, Taku 27-2, Tatsumidai-Higashi 3-chome**
**Ichihara-shi**
**Chiba 290 (JP)**
Inventor: **TERASHIMA, Kanetsugu c/o Chisso Corporation**
**6-32, Nakanoshima 3-chome**
**Kita-ku,**
**Osaka-shi,**
**Osaka 530 (JP)**
Inventor: **SAWADA, Shinichi 8890, Goi**
**Ichihara-shi**
**Chiba 290 (JP)**

(74) Representative: **Hansen, Bernd, Dr. Dipl.-Chem. et al**
**Hoffmann, Eitle & Partner,**
**Patentanwälte,**
**Arabellastrasse 4**
**D-81925 München (DE)**

(54) **LIOUID CRYSTAL COMPOSITION AND LIOUID CRYSTAL DISPLAY DEVICE MADE THEREFROM.**

(57) To provide a liquid crystal composition which has a low resistivity value, requires little electric current and has a low threshold drive voltage. A liquid crystal composition comprising at least one compound represented by general formula (I) and at least one compound represented by general formula (II) wherein $R_1$ and $R_2$ represent each $C_1$-$C_{10}$ alkyl or $C_2$-$C_{10}$ alkenyl; $S_1$ to $S_3$ represent each -F, $-CHF_2$-, $-OCHF_2$, $-CF_3$ or $-OCF_3$; $Z_1$ and $Z_2$ represent each $-Z_3-(C)_n-Z_4-$ (wherein $Z_3$ and $Z_4$ represent each -COO-, $-CH_2CH_2-$, -CH=CH-, ethynylene or a single bond), -COO-, $-CH_2CH_2-$, -CH=CH-, ethynylene or a single bond; A, B and C represent each a trans-cyclohexane or benzene ring; l, m and n represent each 0 or 1 provided that $(l+m+n) \geqq 1$; $Z_5$ represents -COO-, $-CH_2CH_2-$, -CH=CH- or a single bond; $X_1$ represents -F, $-CF_3$, $-OCF_3$, $-CHF_2$, $-OCHF_2$ or -CN; and $Y_1$ represents -H or -F.

EP 0 656 412 A1

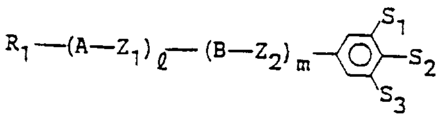

(I)

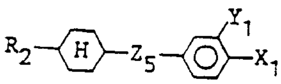

(II)

A liquid crystal composition and a liquid crystal display element using the same

Technical field

This invention relates to a liquid crystal composition for liquid crystal display elements and a liquid crystal display element using the same. More particularly, it relates to a nematic liquid crystal composition for a liquid crystal display of active matrix mode needing a high reliability, and a liquid crystal display element using the same.

Background art

As a theme for developing LCD (liquid crystal display device), two points of high precision (high contrast) and high speed response have been mentioned and researched including its display method. Among them, active matrix LCD (AM-LCD) including TFT (thin film transistor) has been advanced in the coloration and high precision and expected as a prospective winner of flat pannel display. However, its precision, response speed, picture surface size, etc. are far inferior to those of CRT which has been now most popularized among displays. Thus, vigorous research has been made on various elements constituting AM-LCD such as driving circuit, switching element, color filter, etc. Further, for liquid crystal materials, there have been required characteristics which can not be satisfied by conventional material systems having cyano group such as biphenyl systems, PCH systems, etc.

The present inventors have been considering that cyano group of terminal group or side chain has a certain mutual action upon ionic impurities present in display element to thereby have a bad influence upon current value, specific resistance value and hence display contrast, as disclosed in Japanese patent application laid-open No. Hei 2-289682. The drawback of the compound having cyano group consists in that,as a reduction of reliability in element, increase in the consumed current and reduction in the specific resistance are led, coupled with the driving current of two-terminal or three-terminal switch element, and display uneveness and reduction in the contrast are caused in the aspect of display characteristic.

For example, the contrast in TFT liquid crystal display element, shown in Fig. 1 is closely related to its signal voltage-retaining characteristic. This signal voltage-retaining characteristic of the liquid crystal display element refer to a degree of reduction in the signal voltage impressed onto TFT pixel containing liquid crystal within a definite frame period. In the case where the reduction in the signal voltage is absent, the contrast reduction does not occur. Further, as to the signal voltage-retaining characteristic, the lower the storage capacity (Cs) provided in parallel to the liquid crystal and the specific resistance of the liquid crystal (LC) or the signal voltage-retention, the worse the characteristic synergistically. In particular, when the specific resistance of the liquid crystal or the signal voltage-retention is lower than the lower limit values thereof, the signal voltage-retaining characteristic of the display element becomes exponentially worse, to thereby extremely reduce the contrast. In particular, in the case where no storage capacity is added for the reason of simplification of TFT production steps, or the like, contribution of the storage capacity cannot be expected, and as much, a liquid crystal composition having a high specific resistance or signal voltage-retention percentage is particularly required.

Herein, the signal voltage-retention of the liquid crystal composition having a large influence upon the signal voltage-retaining characteristic of the liquid crystal display element, and its measurement will be described. Using the circuit illustrated in Fig. 2, the signal voltage-retention of a cell having the liquid crystal composition filled therein is measured. The liquid crystal cell is measured using transparent electrodes and a glass substrate having an aligned membrane. Next, the waveform at the time of the measurement is illustrated in Fig. 3. The slant line portion refers to a practically observed wave form. The signal voltage-retention is expressed by the following equation:

Signal voltage-retention = $(V_1\text{-}t_1\text{-}t_2\text{-}V_2)/[(V_1)\times(t_1\text{-}t_2)]$

Herein, $(V_1\text{-}t_1\text{-}t_2\text{-}V_2)$ shows the slant line portion in Fig. 3, $(V_1)$ shows a source votage and $(t_1\text{-}t_2)$ shows an impressed time. From such a viewpoint, a liquid crystal composition for AM-LCD composed only of compounds having no cyano group is disclosed in the above-mentioned Japanese patent application laid-open No. Hei 2-289682. Further, among compositions included in TN compositions disclosed in Japanese patent application laid-open No. Sho 63-61083, particularly compositions composed only of compounds having no cyano group have been so often used for AM-LCD.

However, LCDs using such compositions have high threshold voltage so that they are unsuitable to low voltage drive; hence 5V single drive is difficult; thus they are insufficient as a display which is a portable

device of battery drive. Further, they have drawbacks that the viscosity is so high that the response time is slow and the display grade in the display of moving picture is lowered and they cannot correspond to mouse or scroll in the OA use applications.

## Disclosure of the Invention

The object of the present invention is to provide a liquid crystal composition having a relatively low viscosity and a low threshold voltage, while maintaining a high specific resistance value and a low consumption current, and a liquid crystal display device using the liquid crystal composition, which device has a high reliability and a relatively short response time and effects a low votage drive.

The present invention consists in a liquid crystal composition characterized by containing the following first component and second component, and a liquid crystal display element using the liquid crystal composition:

### First component

at least one member of compounds expressed by the formula (I):

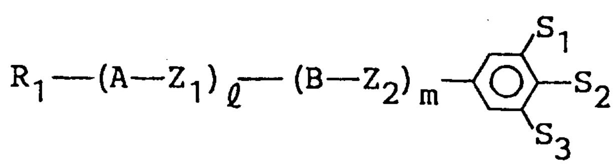

(I)

wherein $R_1$ represents an alkyl group of 1 to 10 carbon atoms or an alkenyl group of 2 to 10 carbon atoms (one or two not-adjacent carbon atoms in these groups may be substituted by oxygen atom, -CO- or -COO-),

$S_1$, $S_2$ and $S_3$ may be the same or different and each represent fluorine atom, $-CHF_2$, $-OCHF_2$, $-CF_3$ or $-OCF_3$,

$Z_1$ and $Z_2$ may be the same or different and each represent $-Z_3-(C)_n-Z_4-$ (wherein $Z_3$ and $Z_4$ may be the same or different and each represent -COO-, $-CH_2CH_2-$, -CH = CH-, ethynylene group or single bond), -COO-, $-CH_2CH_2-$,-CH = CH-, ethynylene group or single bond,

A, B and C may be the same or different, and each represent trans-cyclohexane ring:

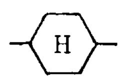

(one or two or more not-adjacent $=CH_2$-s may be substituted by oxygen atom), or benzene ring

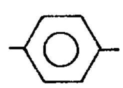

(one or two or more =CH-s in the ring may be substituted by nitrogen atom, and the hydrogen atoms in the ring may be substituted by fluorine atoms), and

$\ell$, m and n are the same or different, and each are 0 or 1 and $\ell + m + n \geq 1$),

Second component

at least one member of compounds expressed by the formula (II):

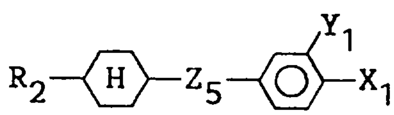

(II)

wherein $R_2$ represents an alkyl group of 1 to 10C or an alkenyl group of 2 to 10C (wherein one or two not-adjacent carbon atoms in these groups may be substituted by oxygen atom, -CO- or -COO-),

$Z_5$ represents -COO-, $-CH_2CH_2-$, -CH=CH- or single bond,

$x_1$ represents F, $-CF_3$, $-OCF_3$ or $-CHF_2$,

$Y_1$ represents H or F

(wherein when $Z_5$ is single bond and $X_1$ is F, $Y_1$ cannot be H).

Brief description of the drawings

Fig. 1 shows an equivalent circuit of TFT display element.

Fig. 2 shows a circuit for measuring the signal voltage-retention of liquid crystal cell.

Fig. 3 shows the driving wave form and measured waveform at the time of measuring the signal voltage-retention

Description of the Symbols

| | |
|---|---|
| G | Gate electrode |
| S | Source electrode |
| D | Drain electrode |
| $C_s$ | Storage capacity |
| LC | Liquid crystal |
| $V_G$ | Scanning signal |
| $V_s$ | Display signal |
| $V_c$ | Direct current voltage |

Embodiments of the Invention

As the first component of the present invention, at least one member of compounds expressed by the formula (I), but having the following definitions, are preferably used:

$R_1$ represents an alkyl group of 1 to 10C (wherein one or two not-adjacent carbon atoms in this group may be substituted by oxygen atom),

$Z_1$ and $Z_2$ may be the same or different and each represent $-Z_3-(C)_n-Z_4$ (wherein $Z_3$ and $Z_4$ may be the same or different and each represent -COO-, $-CH_2CH_2-$, -CH=CH- or single bond), -COO-, $-CH_2CH_2-$, -CH=CH- or single bond,

A, B and C may be the same or different, and each represent trans-cyclohexane ring or benzene ring (H atoms in these rings may be sustituted by F atom) and other symbols are as defined above.

As the second component of the present invention, at least one of compounds expressed by the formula (II), but having the following definitions, are preferably used:

$R_2$ represents an alkyl group of 1 to 10C (wherein one or two not-adjacent carbon atoms in this group may be substituted by oxygen atom), and

$X_1$ represents -F, $-CF_3$ or $-OCF_3$ (other symbols are as defined above).

The above formula (I) can be concretely represented by the following formulas (Ia), (Ib) and (Ic):
Formula (Ia):

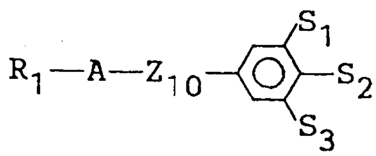

(Ia)

Formula (Ib):

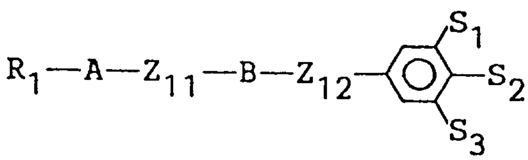

(Ib)

and Formula (Ic);

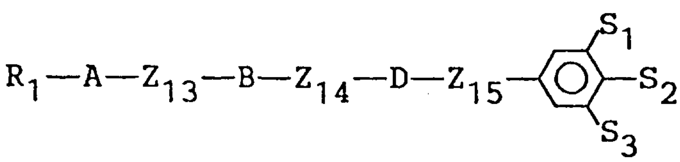

(Ic)

In the above formula (Ia),

$Z_{10}$ represents -COO-, $-CH_2CH_2-$, -CH = CH-, ethynylene group or single bond (other symbols are as defined above).

In the above formula (Ib),

$Z_{11}$ and $Z_{12}$ may be the same or different, and each represent -COO-, $-CH_2CH_2-$, -CH = CH-, ethynylene group or single bond (other symbols are as defined above).

In the general formula (Ic),

$Z_{13}$ represents $-Z_{16}-(C)_n-Z_{17}-$, -COO-, $-CH_2CH_2-$, -CH = CH-, ethynylene group or single bond,

$Z_{14}$, $Z_{15}$, $Z_{16}$ and $Z_{17}$ may be the same or different, and each represent -COO-, $-CH_2CH_2-$, -CH = CH-, ethynylene group or single bond,

D has the same definition as that of A in the formula (I).

Preferable examples of compounds expressed by the formula (Ia) are as follows:

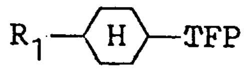

(Ia1A)

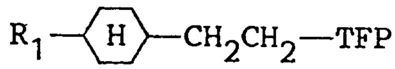

(Ia1B)

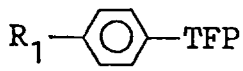

(Ia1C)

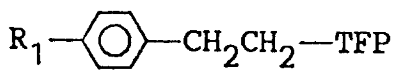

(Ia1D)

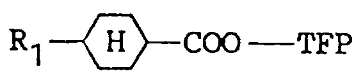

(Ia1E)

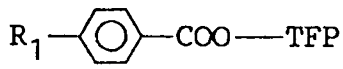
(Ia1F)

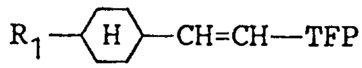
(Ia1G)

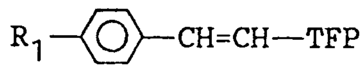
(Ia1H)

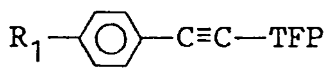
(Ia1I)

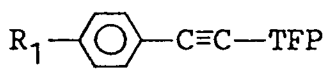
(Ia1J)

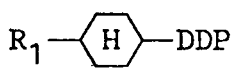
(Ia2A)

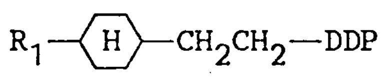
(Ia2 B)

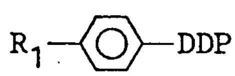
(Ia2C)

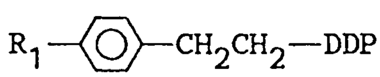
(Ia2D)

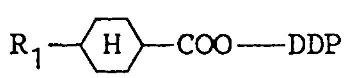
(Ia2E)

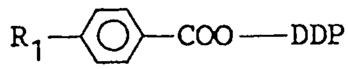

(Ia2F)

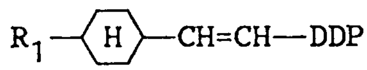

(Ia2G)

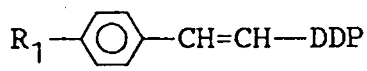

(Ia2H)

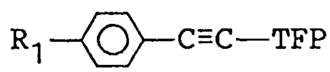

(Ia2I)

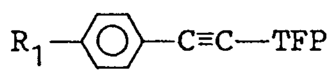

(Ia2J)

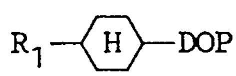

(Ia3A)

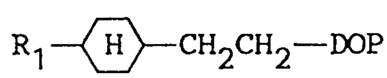

(Ia3B)

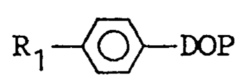

(Ia3C)

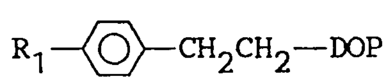

(Ia3D)

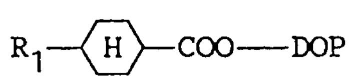

(Ia3E)

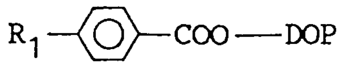 (Ia3F)

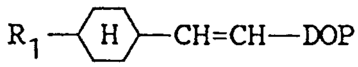 (Ia3G)

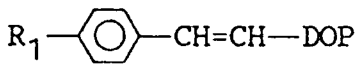 (Ia3H)

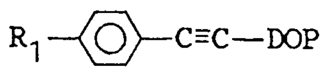 (Ia3I)

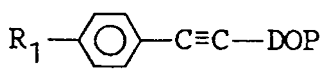 (Ia3J)

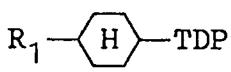 (Ia4A)

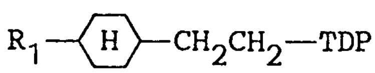 (Ia4B)

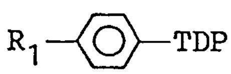 (Ia4C)

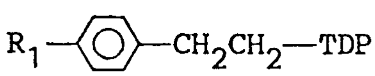 (Ia4D)

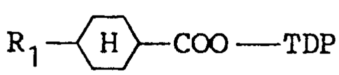 (Ia4E)

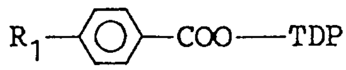 (Ia4F)

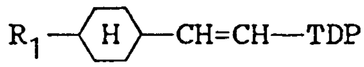 (Ia4G)

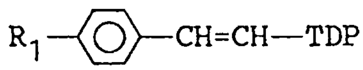 (Ia4H)

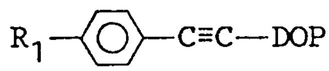 (Ia4I)

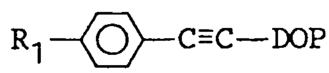 (Ia4J)

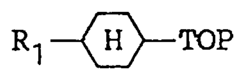 (Ia5A)

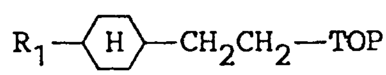 (Ia5B)

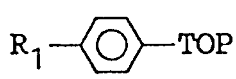 (Ia5C)

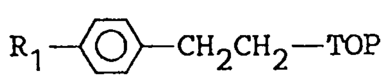 (Ia5D)

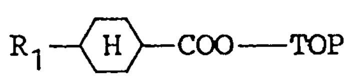 (Ia5E)

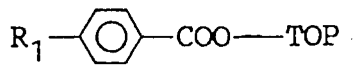

(Ia5F)

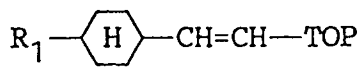

(Ia5G)

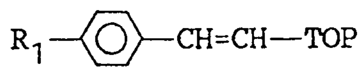

(Ia5H)

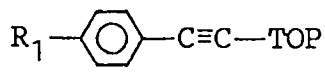

(Ia5I)

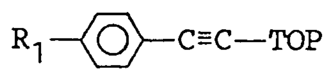

(Ia5J)

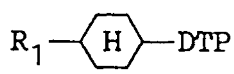

(Ia6A)

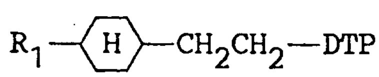

(Ia6B)

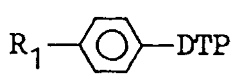

(Ia6C)

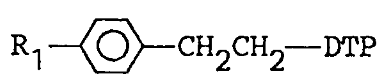

(Ia6D)

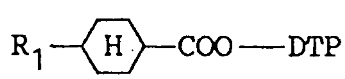

(Ia6E)

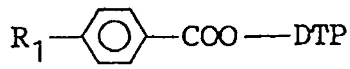

(Ia6F)

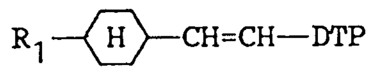

(Ia6G)

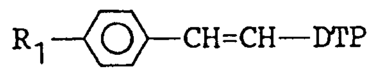

(Ia6H)

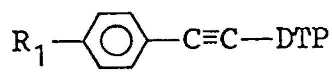

(Ia6I)

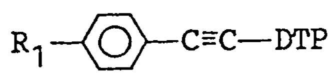

(Ia6J)

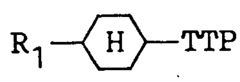

(Ia7A)

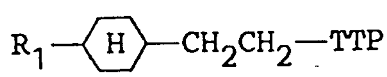

(Ia7B)

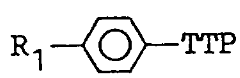

(Ia7C)

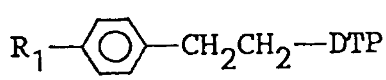

(Ia7D)

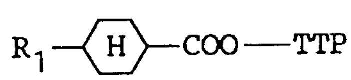

(Ia7E)

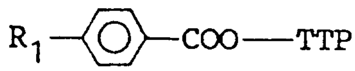

(Ia7F)

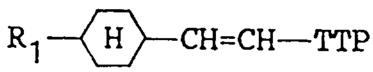

(Ia7G)

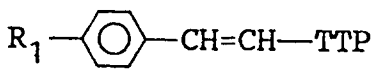

(Ia7H)

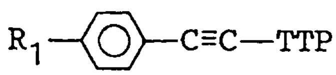

(Ia7I)

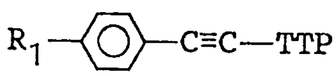

(Ia7J)

In the above formulas, TFP, DDP, DOP, TDP, TOP, DTP and TTP, each represent the following structural formulas:

T F P :

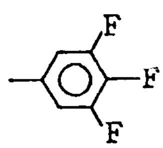

D D P :

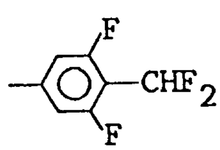

D O P :

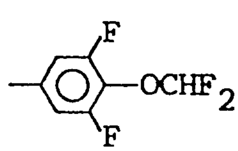

T D P :

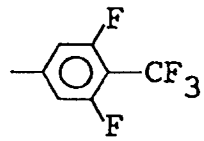

TOP:

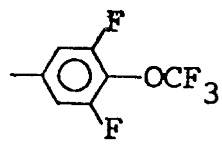

DTP:

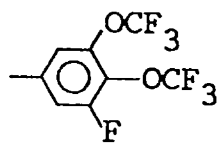

TTP:

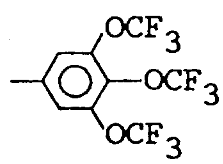

The above symbols have the same meanings in the following all formulas, and among the above compounds, the following compounds are preferably used:

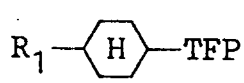
(Ia1A)

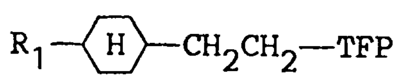
(Ia1B)

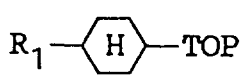
(Ia5A)

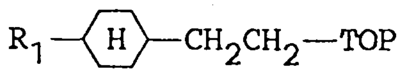

(Ia5B)

Among the above compounds, those wherein $R_1$ is a linear alkyl group or a linear alkoxy group of 1 to 10C are preferable, and those wherein $R_1$ is a linear alkyl group or a linear alkoxy group of 1 to 5C are particularly preferable.

Preferable concrete examples of compounds expressed by the above formulas (Ib) are as follows:

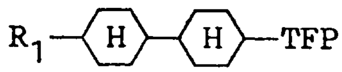

(Ib1A)

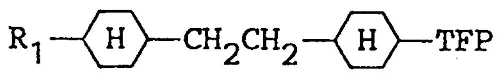

(Ib1B)

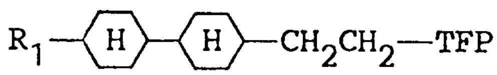

(Ib1C)

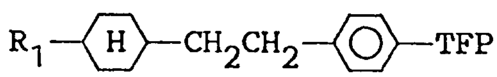

(Ib1D)

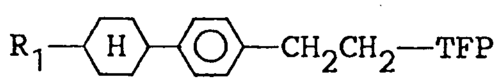

(Ib1E)

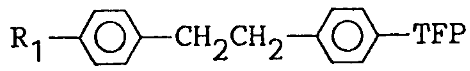 (Ib1F)

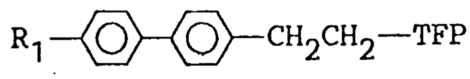 (Ib1G)

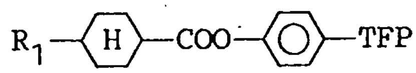 (Ib1J)

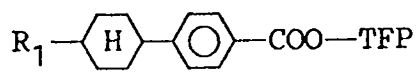 (Ib1K)

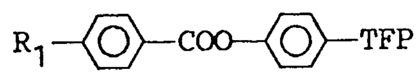 (Ib1L)

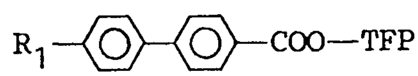 (Ib1M)

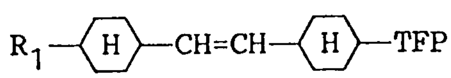 (Ib1N)

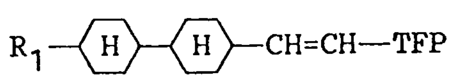 (Ib1O)

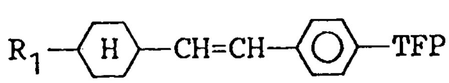 (Ib1P)

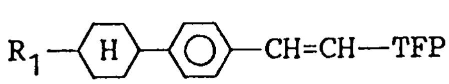 (Ib1Q)

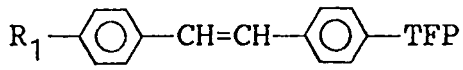

(Ib1R)

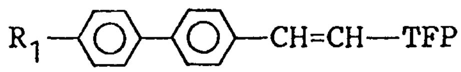

(Ib1S)

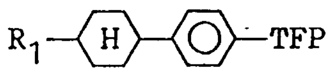

(Ib1T)

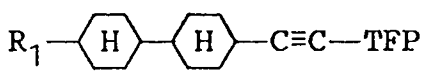

(Ib1U)

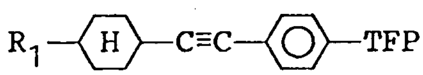

(Ib1V)

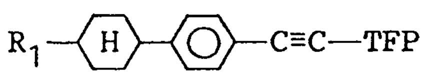

(Ib1W)

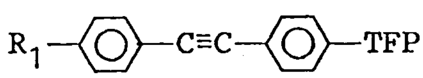

(Ib1X)

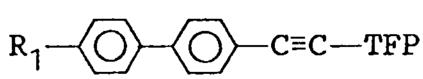

(Ib1Y)

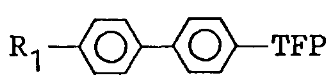

(Ib1Z)

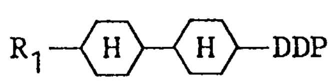

(Ib2A)

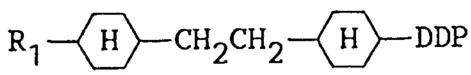
(Ib2B)

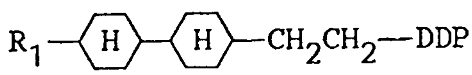
(Ib2C)

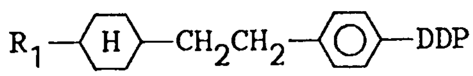
(Ib2D)

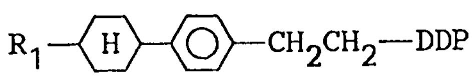
(Ib2E)

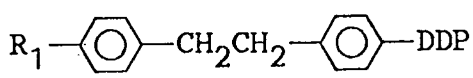
(Ib2F)

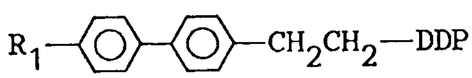
(Ib2G)

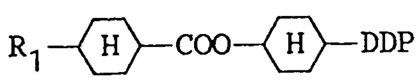
(Ib2H)

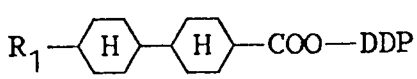
(Ib2I)

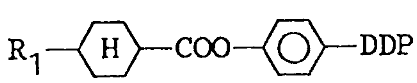
(Ib2J)

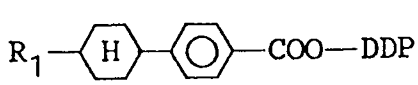
(Ib2K)

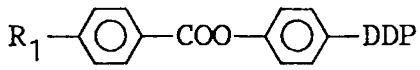

(Ib2L)

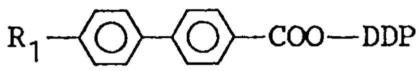

(Ib2M)

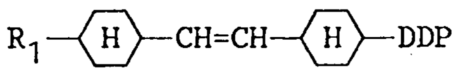

(Ib2N)

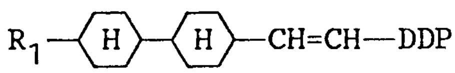

(Ib2O)

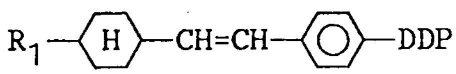

(Ib2P)

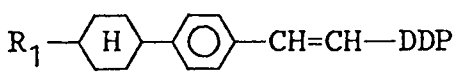

(Ib2Q)

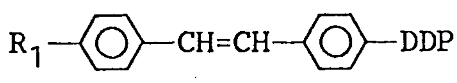

(Ib2R)

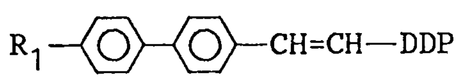

(Ib2S)

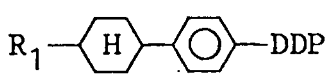

(Ib2T)

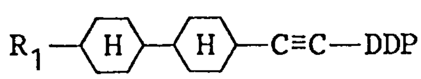

(Ib2U)

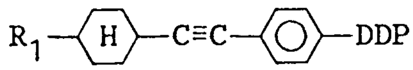 (Ib2V)

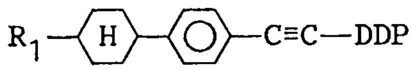 (Ib2W)

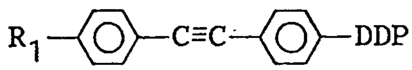 (Ib2X)

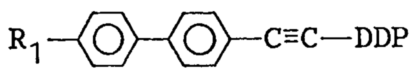 (Ib2Y)

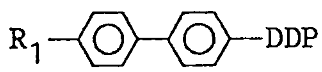 (Ib2Z)

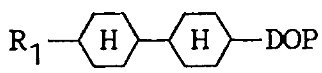 (Ib3A)

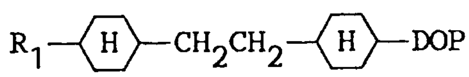 (Ib3B)

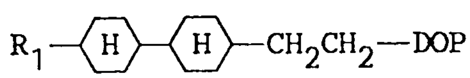 (Ib3C)

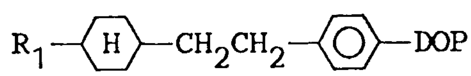 (Ib3D)

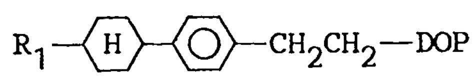 (Ib3E)

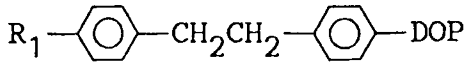
(Ib3F)

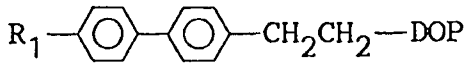
(Ib3G)

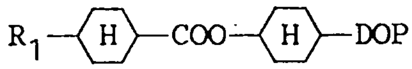
(Ib3H)

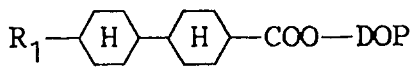
(Ib3I)

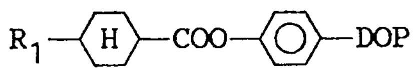
(Ib3J)

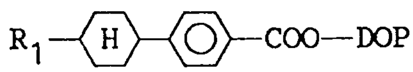
(Ib3K)

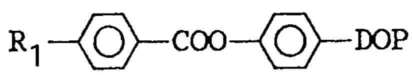
(Ib3L)

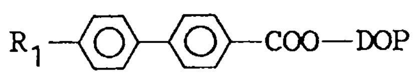
(Ib3M)

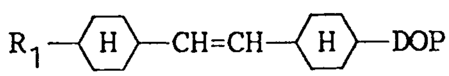
(Ib3N)

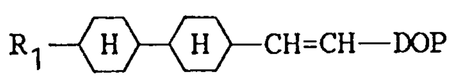
(Ib3O)

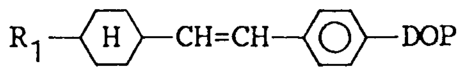

(Ib3P)

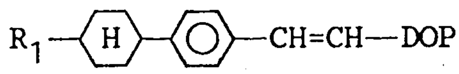

(Ib3Q)

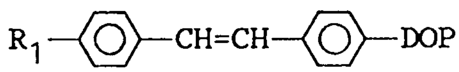

(Ib3R)

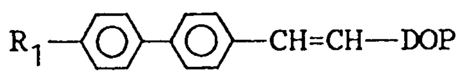

(Ib3S)

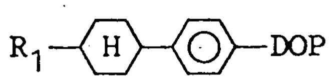

(Ib3T)

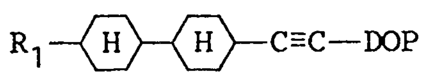

(Ib3U)

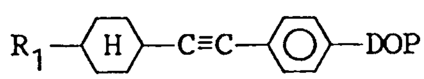

(Ib3V)

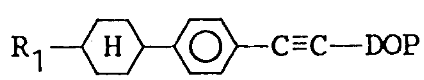

(Ib3W)

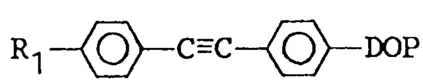

(Ib3X)

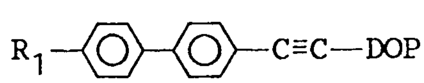

(Ib3Y)

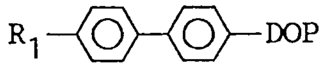 (Ib3Z)

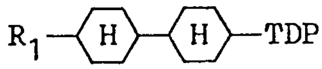 (Ib4A)

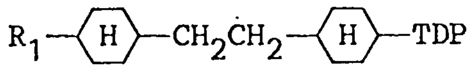 (Ib4B)

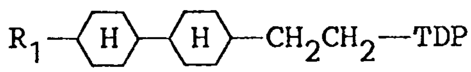 (Ib4C)

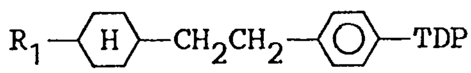 (Ib4D)

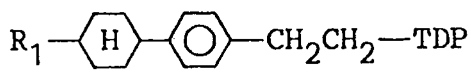 (Ib4E)

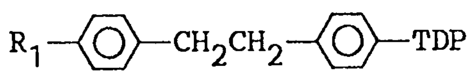 (Ib4F)

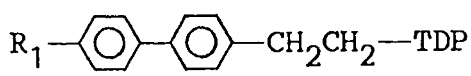 (Ib4G)

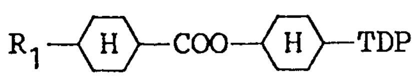 (Ib4H)

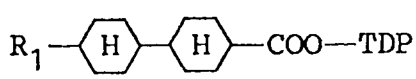 (Ib4I)

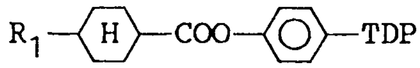 (Ib4J)

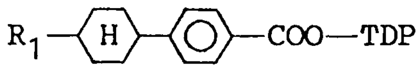 (Ib4K)

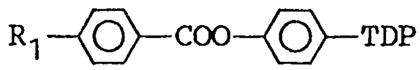 (Ib4L)

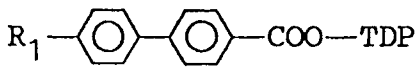 (Ib4M)

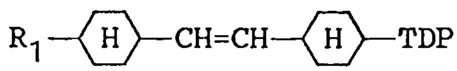 (Ib4N)

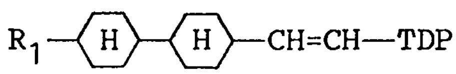 (Ib4O)

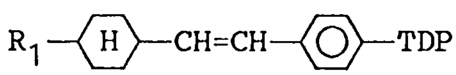 (Ib4P)

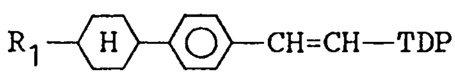 (Ib4Q)

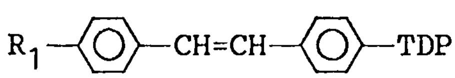 (Ib4R)

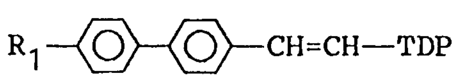 (Ib4S)

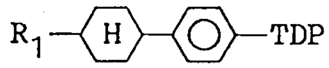

(Ib4T)

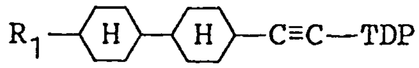

(Ib4U)

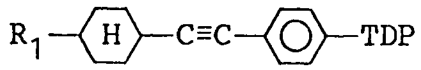

(Ib4V)

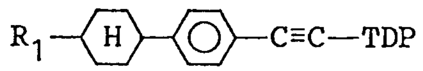

(Ib4W)

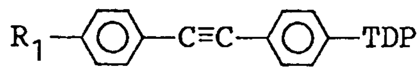

(Ib4X)

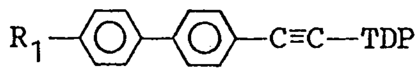

(Ib4Y)

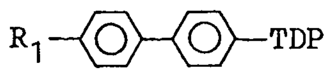

(Ib4Z)

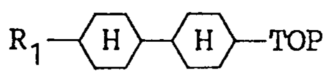

(Ib5A)

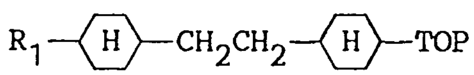

(Ib5B)

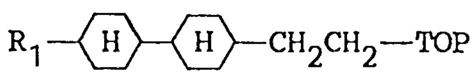

(Ib5C)

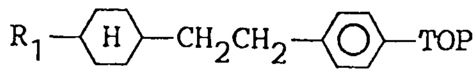

(Ib5D)

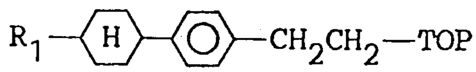

(Ib5E)

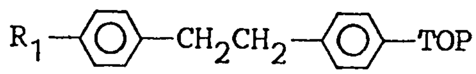

(Ib5F)

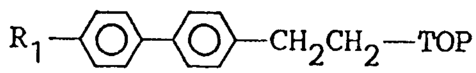

(Ib5G)

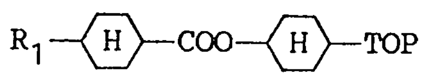

(Ib5H)

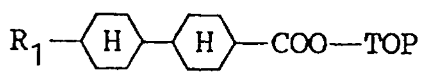

(Ib5I)

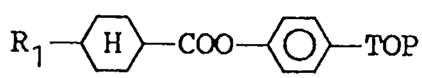

(Ib5J)

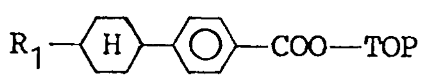

(Ib5K)

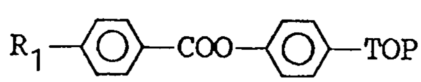

(Ib5L)

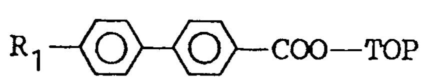

(Ib5M)

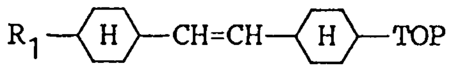

(Ib5N)

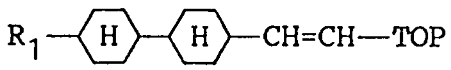

(Ib5O)

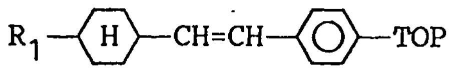

(Ib5P)

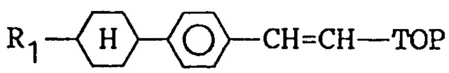

(Ib5Q)

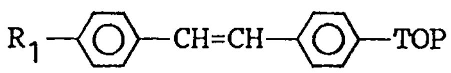

(Ib5R)

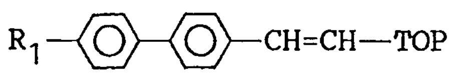

(Ib5S)

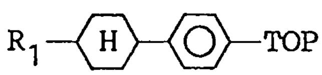

(Ib5T)

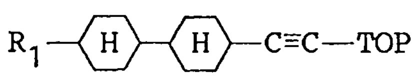

(Ib5U)

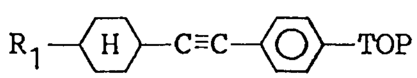

(Ib5V)

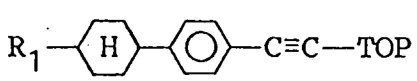

(Ib5W)

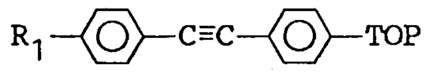
(Ib5X)

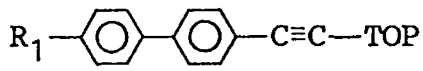
(Ib5Y)

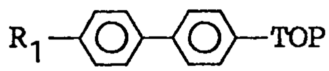
(Ib5Z)

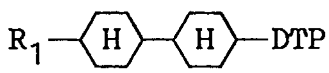
(Ib6A)

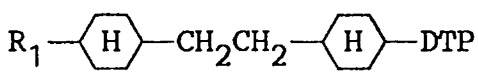
(Ib6B)

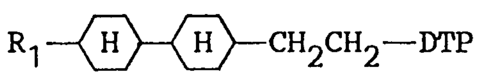
(Ib6C)

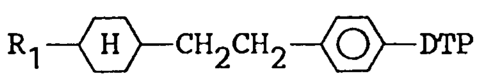
(Ib6D)

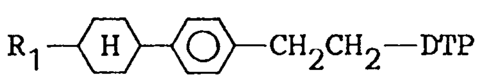
(Ib6E)

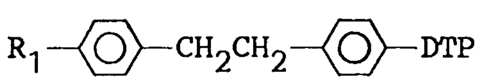
(Ib6F)

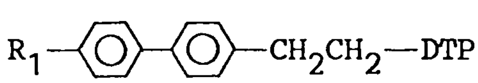
(Ib6G)

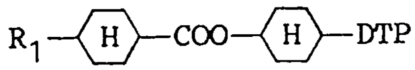

(Ib6H)

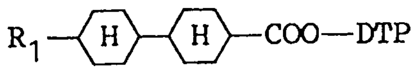

(Ib6I)

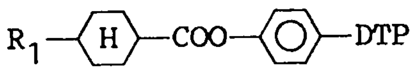

(Ib6J)

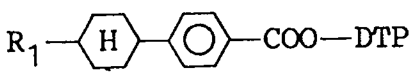

(Ib6K)

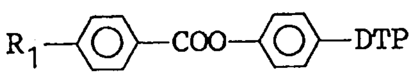

(Ib6L)

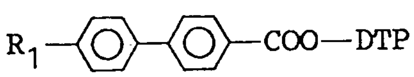

(Ib6M)

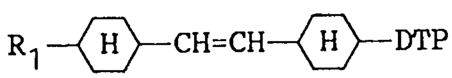

(Ib6N)

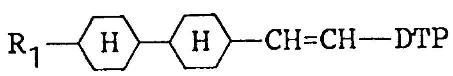

(Ib6O)

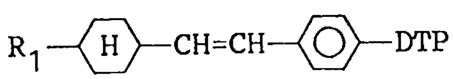

(Ib6P)

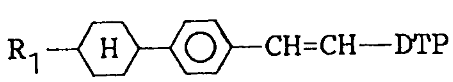

(Ib6Q)

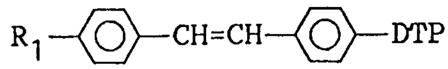

(Ib6R)

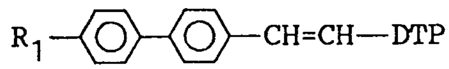

(Ib6S)

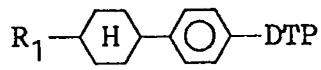

(Ib6T)

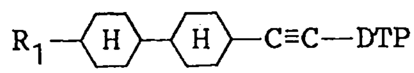

(Ib6U)

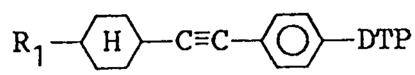

(Ib6V)

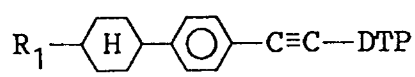

(Ib6W)

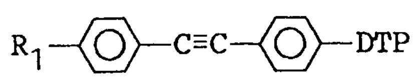

(Ib6X)

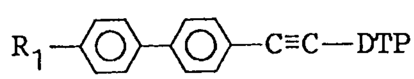

(Ib6Y)

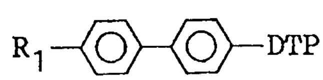

(Ib6Z)

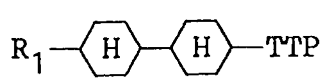

(Ib7A)

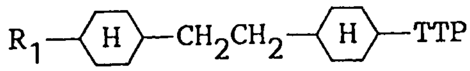

(Ib7B)

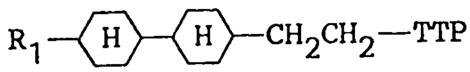

(Ib7C)

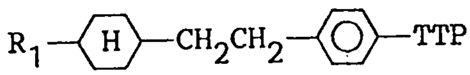

(Ib7D)

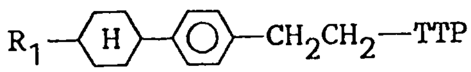

(Ib7E)

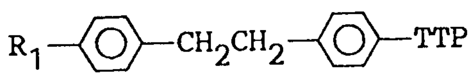

(Ib7F)

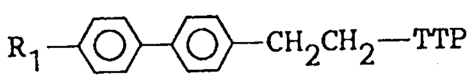

(Ib7G)

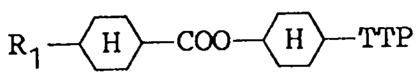

(Ib7H)

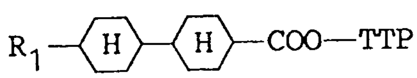

(Ib7I)

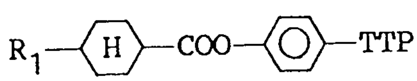

(Ib7J)

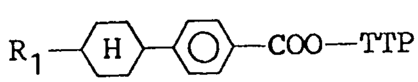

(Ib7K)

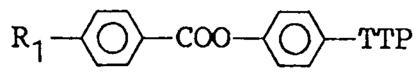
(Ib7L)

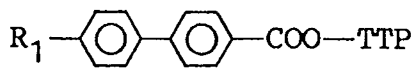
(Ib7M)

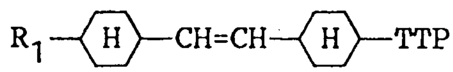
(Ib7N)

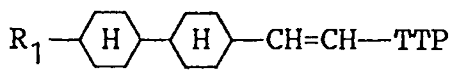
(Ib7O)

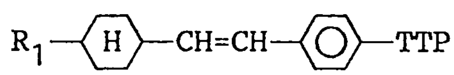
(Ib7P)

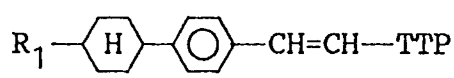
(Ib7Q)

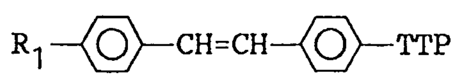
(Ib7R)

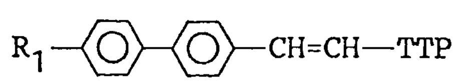
(Ib7S)

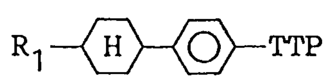
(Ib7T)

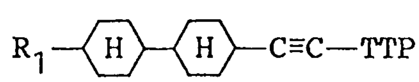
(Ib7U)

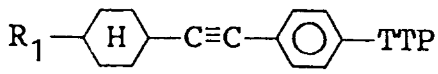

(Ib7V)

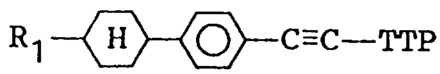

(Ib7W)

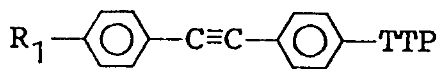

(Ib7X)

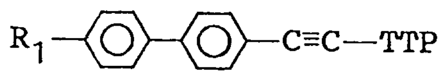

(Ib7Y)

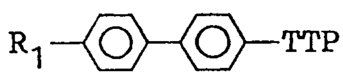

(Ib7Z)

Among the above compounds, the following compounds are preferably used:

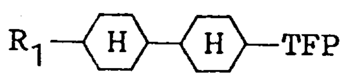

(Ib1A)

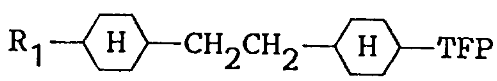

(Ib1B)

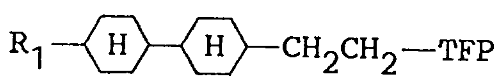

(Ib1C)

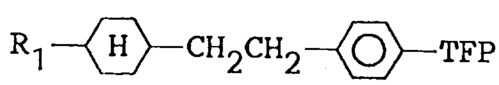

(Ib1D)

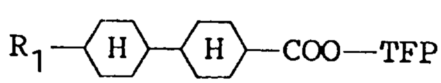

(Ib1I)

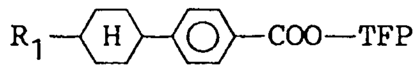

(Ib1K)

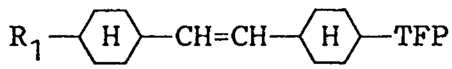

(Ib1N)

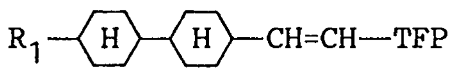

(Ib1O)

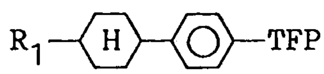

(Ib1T)

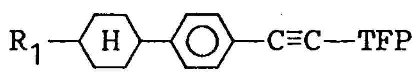

(Ib1W)

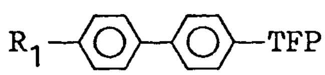

(Ib1Z)

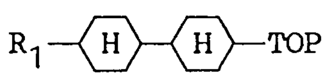

(Ib5A)

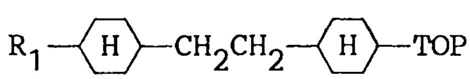

(Ib5B)

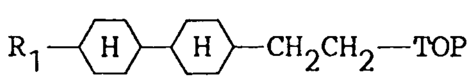

(Ib5C)

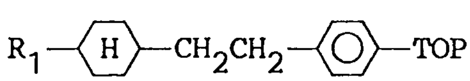

(Ib5D)

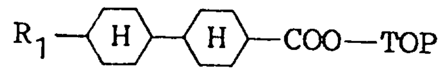

(Ib5I)

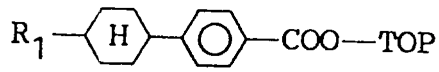

(Ib5K)

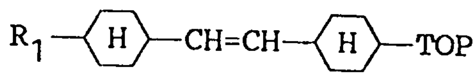

(Ib5N)

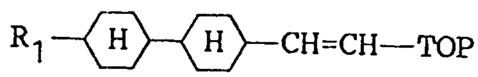

(Ib5O)

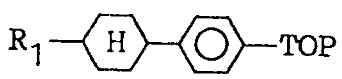

(Ib5T)

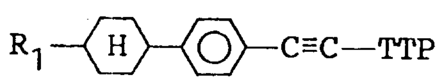

(Ib5W)

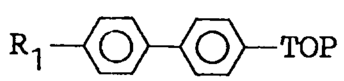

(Ib5Z)

Among the above compounds, the following compounds are preferably used:

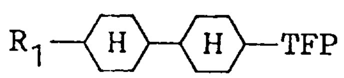

(Ib1A)

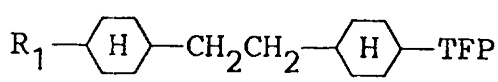

(Ib1B)

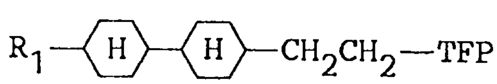

(Ib1C)

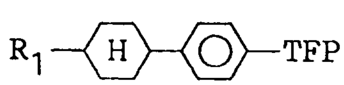

(Ib1T)

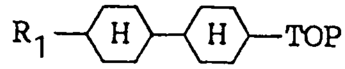 (Ib5A)

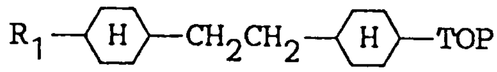 (Ib5B)

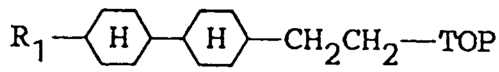 (Ib5C)

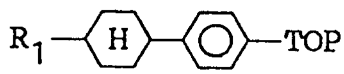 (Ib5T)

Among the above compounds, those wherein $R_1$ is a linear alkyl group or a linear alkoxy group of 1 to 10C, particularly those wherein $R_1$ is a linear alkyl group or a linear alkoxy group of 1 to 5C are preferable.

Preferable concrete examples of compounds expressed by the above formula (Ic) are as follows:

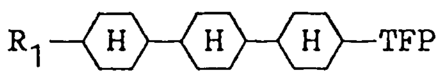 (Ic1A)

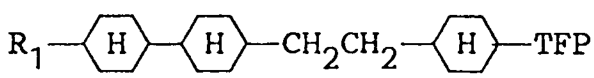 (Ic1B)

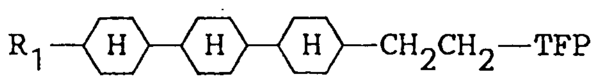 (Ic1C)

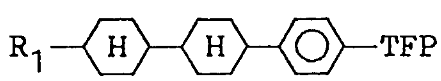 (Ic1D)

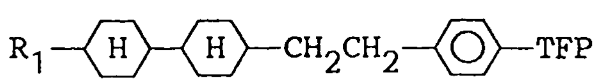 (Ic1E)

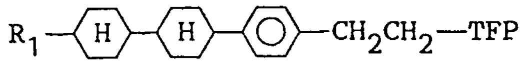

(Ib1F)

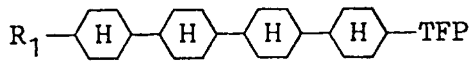

(Ic1G)

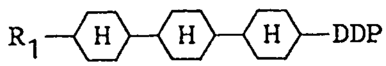

(Ic2A)

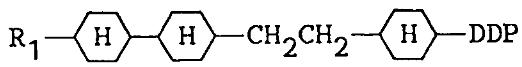

(Ic2B)

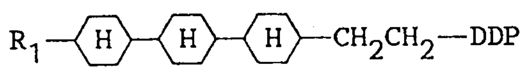

(Ic2C)

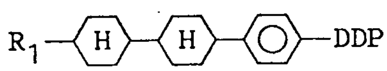

(Ic2D)

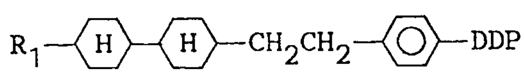

(Ic1E)

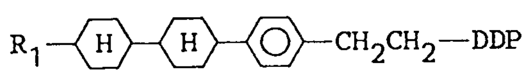

(Ic2F)

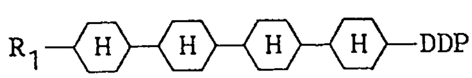

(Ic2G)

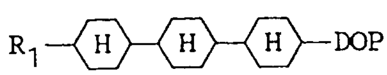

(Ic3A)

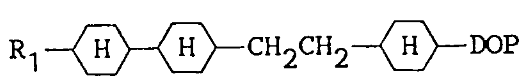

(Ic3B)

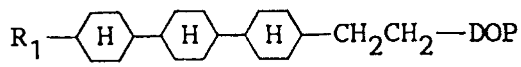

(Ic3C)

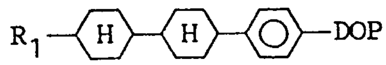

(Ic3D)

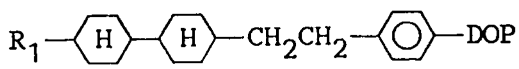

(Ic3E)

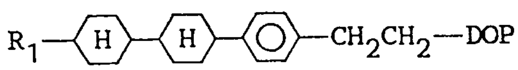

(Ic3F)

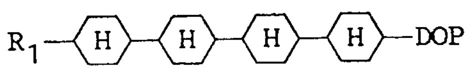

(Ic3G)

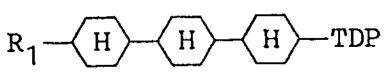

(Ic4A)

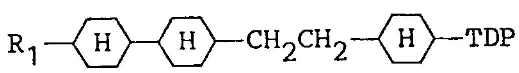

(Ic4B)

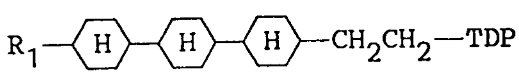

(Ic4C)

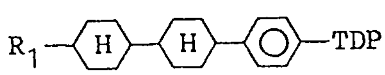

(Ic4D)

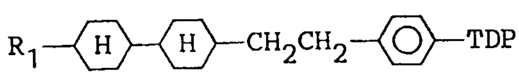

(Ic4E)

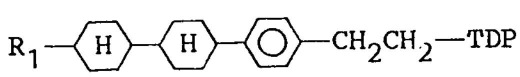

(Ic4F)

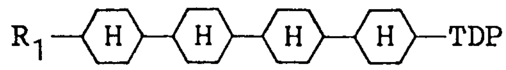

(Ic4G)

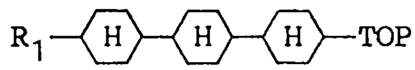

(Ic5A)

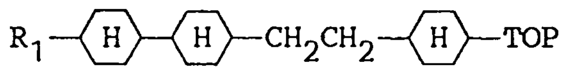

(Ic5B)

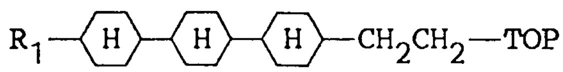

(Ic5C)

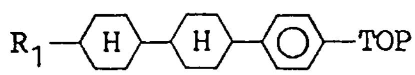

(Ic5D)

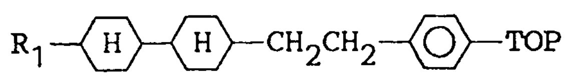

(Ic5E)

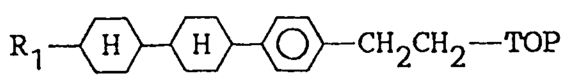

(Ic5F)

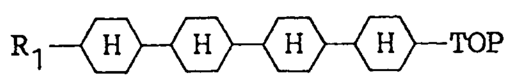

(Ic5G)

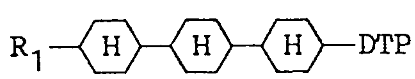

(Ic6A)

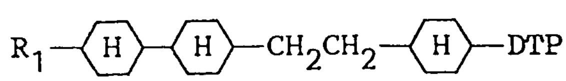

(Ic6B)

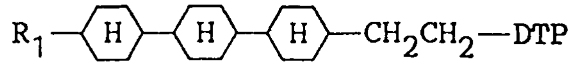

(Ic6C)

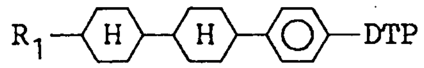

(Ic6D)

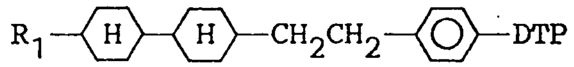

(Ic6E)

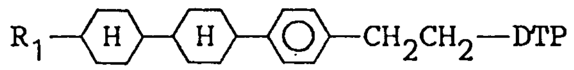

(Ic6F)

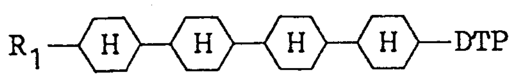

(Ic6G)

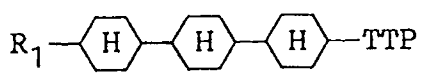

(Ic7A)

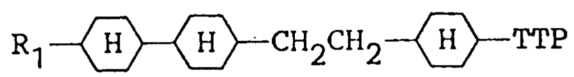

(Ic7B)

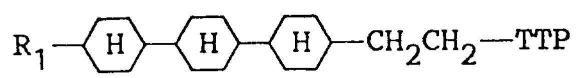

(Ic7C)

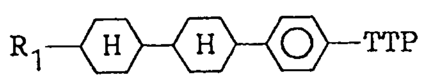

(Ic7D)

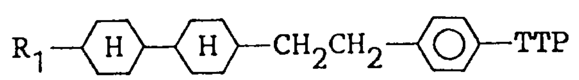

(Ic7E)

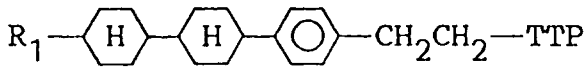

(Ic7F)

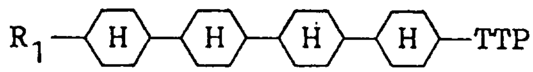

(Ic7G)

Among the above compounds, the following compounds are preferably used:

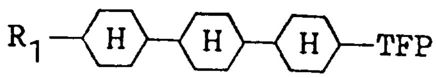

(Ic1A)

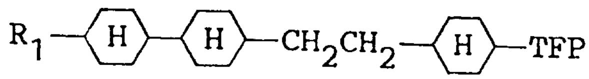

(Ic1B)

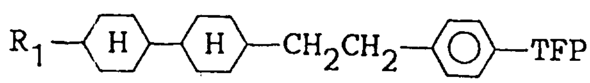

(Ic1E)

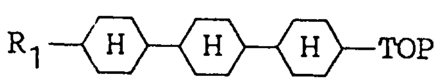

(Ic5A)

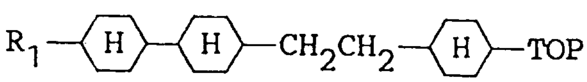

(Ic5B)

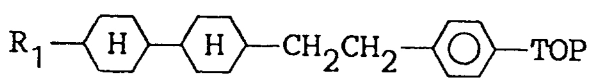

(Ic5E)

Among the above compounds, those wherein $R_1$ is a linear alkyl group or a linear alkoxy group of 1 to 10C, particularly those wherein $R_1$ is a linear alkyl group or a linear alkoxy group of 1 to 5C, are preferable.

The compounds expressed by the formula (I) are known as described in for example, Japanese patent application laid-open No. Sho 2-233626, and have characteristics of a high clearing point, a broad liquid crystal phase, a low viscosity and a relatively large dielectric anisotropy.

Among the compounds expressed by the formula (I), those wherein $R_1$ of the above formulas (Ib1A), (Ib1B) and (Ib1C) is a linear alkyl group of 3C (propyl group) are named $IA_3$, $IB_3$ and $IC_3$, and mixtures of these compounds with commercially available cyclohexanebenzonitrile group liquid crystal ZLI-1132 (made by E. Merck; hereinafter abbreviated to "Commercially available liquid crystal 32") are each named $IA_3$(P), $IB_3$(P) and $IC_3$(P), and the values of physical properties thereof are shown in Table 1.

Table 1

| | | $IA_3(P)$ | $IB_3(P)$ | $IC_3(P)$ | Commercially available L.C.32 |
|---|---|---|---|---|---|
| Mixture part by weight | $IA_3$ | 15 | | | |
| | $IB_3$ | | 15 | | |
| | $IC_3$ | | | 15 | |
| | Commercially available L.C.32 | 85 | 85 | 85 | 100 |
| Characteristics | M.P. Mp(°C) | <-20 | <-20 | <-20 | |
| | Clearing point Cp(°C) | 72.4 (72.4) | 71.0 (63.1) | 73.4 (79.1) | 72.4 |
| | Refractive anisotropy Δn | 0.130 (0.130) | 0.125 (0.057) | 0.129 (0.084) | 0.137 |

* The values in the parentheses refer to extrapolated values.

In addition, the numeral values in the parentheses of Table 1 were sought according to extraporation method, regarding that the values of physical properties of the mixtures are additive as regards the mixing weight.

Preferable concrete examples of the compounds expressed by the above formula (II), as the second component of the present invention are as follows:

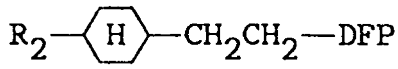

(II A)

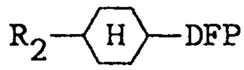

(II B)

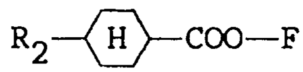

(II C)

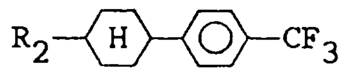

(II D)

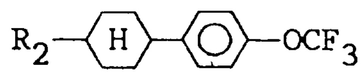

(II E)

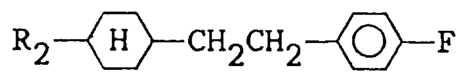

(II G)

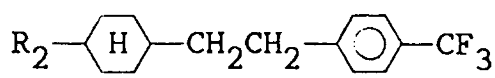

(II H)

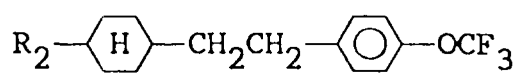

(II I)

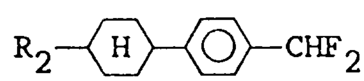

(II J)

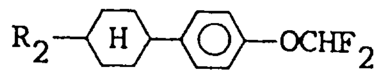
(II K)

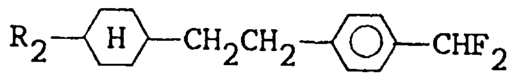
(II L)

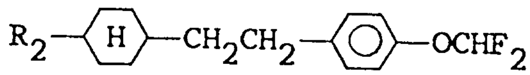
(II M)

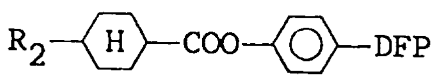
(II N)

In the above formulas, $R_2$ is as defined above, and DFP represents the following formula:

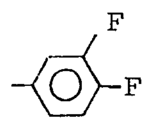

Among the above compounds, the following compounds are preferably used:

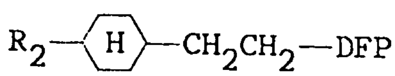
(II A)

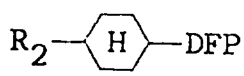
(II B)

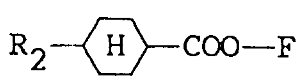
(II C)

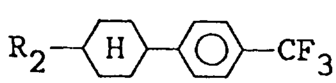
(II D)

Among the above compounds, those wherein $R_2$ is a linear alkyl group or an alkoxy group of 1 to 10C are preferable, and particularly those wherein $R_2$ is a linear alkyl group or a linear alkoxy group of 1 to 7C are preferable.

Among the compounds expressed by the formula (II), compounds wherein $R_2$ of the above formulas (IIA), (IIB) and (IIC)is a linear alkyl group of 5C (pentyl group) are respectively named $IIA_5$, $IIB_5$ and $IIC_5$, and the values of physical properties (extrapolated values) in the case where these compounds were dissolved in a quantity of 15% by weight in a commercially available cyclohexanebenzonitrile group liquid crystal ZLI-1083 (made by E. Merck: hereinafter abbreviated to "commercially available liquid crystal 83") are shown in Table 2.

Table 2

| | $IIA_5$ | $IIB_5$ | $IIC_5$ |
|---|---|---|---|
| NI (°C) | -47.3 | -52.7 | 9.3 |
| $\eta_{20}$ (cp) | -8.2 | -12.2 | -8.2 |
| $\Delta n$ | 0.007 | -0.007 | 0.033 |
| $\Delta\epsilon$ | 10.9 | 10.9 | 9.6 |

As apparent from Table 2, any of these compounds exhibit physically common properties such as a positive dielectric anisotropy of 9.6 to 10.9, a low viscosity of -8.2 to -12.2 cp, etc. Further, they have a very low specific resistance. For practical use, the proportion of these compounds used in the liquid crystal composition of the present invention is suitably 30% by weight, taking into account, lowering of clearing point accompanying the addition of these compounds, etc.

The compounds expressed by the formula (II) are known as disclosed in for example, Japanese patent application laid-open Nos. Hei 2-111734 and Sho 61-207347 and WO 8902884.

The liquid crystal composition of the present invention may contain the following third component besides the above first component and second component:

Third component

At least one member of compounds expressed by the formula (III):

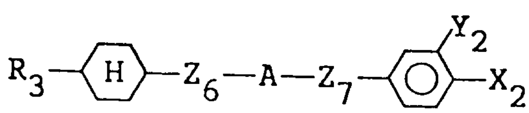

(III)

wherein
- $R_3$ is as defined by $R_1$ of the formula (I),
- A is as defined by A of the formula (I),
- $Z_6$ represents -COO-, $-CH_2CH_2-$, -CH=CH- or single bond,
- $Z_7$ represents -COO-, $-CH_2CH_2-$, -CH=CH-, ethynylene group or single bond,
- $X_2$ represents F, $-CF_3$, $-OCF_3$, $-CHF_2$ or $-OCHF_2$, and
- $Y_2$ is as defined by $Y_1$ of the formula (II).

Namely, one of the liquid crystal compositions of the present invention contains the above first component, second component and third component.

As the third component of the present invention, there is preferably used at least one of compounds of the formula (III) wherein
- $R_3$ represents an alkyl group of 1 to 10C (wherein one or two not-adjacent carbon atoms in the group may be substituted by oxygen atom),
- A represents trans-cyclohexane ring or benzene ring (the hydrogen atom in these rings may be substituted by F), and
- $X_2$ represents F atom or $-CF_3$ (other symbols are as defined above).

Preferable concrete examples of the compounds expressed by the above formula (III) are as follows:

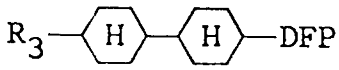

(III A)

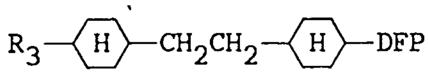

(Ⅲ B)

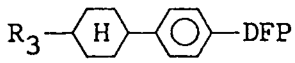

(Ⅲ C)

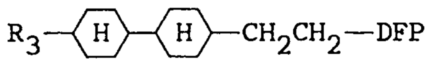

(Ⅲ D)

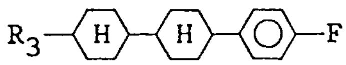

(Ⅲ E)

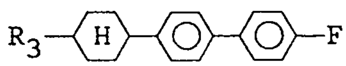

(Ⅲ F)

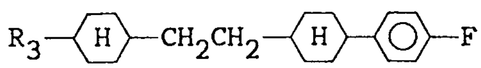

(Ⅲ G)

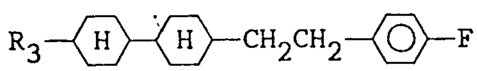

(Ⅲ H)

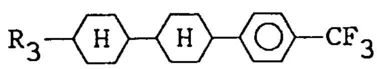

(Ⅲ I)

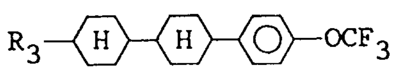

(Ⅲ J)

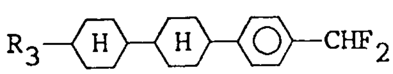

(Ⅲ K)

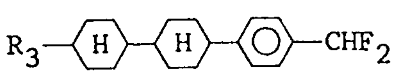

(Ⅲ L)

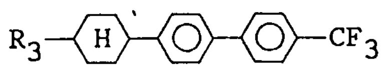

(Ⅲ M)

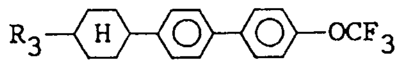

(Ⅲ N)

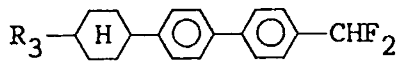

(Ⅲ O)

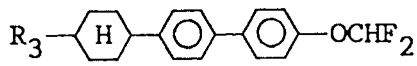

(Ⅲ P)

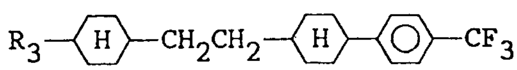

(Ⅲ Q)

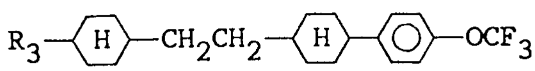

(Ⅲ R)

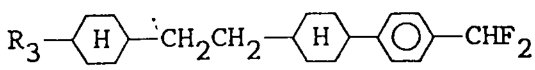

(Ⅲ S)

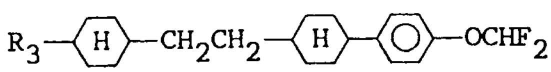

(Ⅲ T)

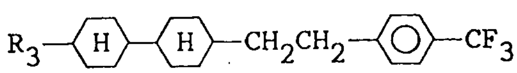

(Ⅲ U)

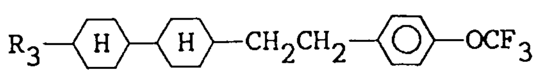

(Ⅲ V)

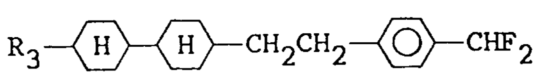

(Ⅲ W)

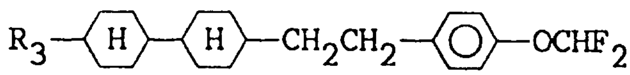

(III X)

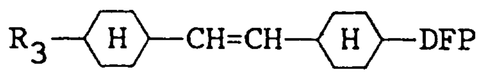

(III Y)

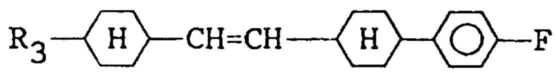

(III Z)

Among the above compounds, the following compounds are preferably used:

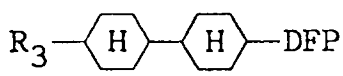

(III A)

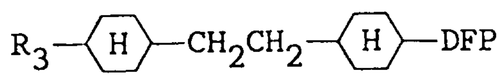

(III B)

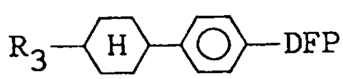

(III C)

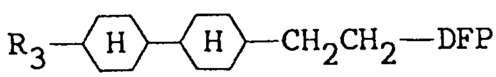

(III D)

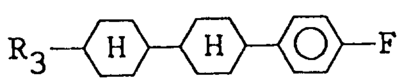

(III E)

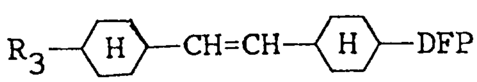

(III Y)

Among the compounds, those wherein $R_3$ represents a linear alkyl group or a linear alkoxy group of 1 to 10C, particularly those wherein $R_3$ represents a linear alkyl group or a linear alkoxy group of 1 to 5C are preferably used.

Compounds expressed by the formula (III) are known as disclosed in for example, Japanese patent application laid-open Nos. Sho 57-64626, Sho 57-154135, Sho 62-25683 and Sho 57-185230, USP 4,797,228 and USP 4,820,443, and have a high clearing point, a positive dielectric anisotropy and a low viscosity and a high specific resistance, for three-ring system.

The liquid crystal composition of the present invention may contain the following fourth component, besides the first, second and third components:

Fourth component

At least one of compounds expressed by the formula (IV):

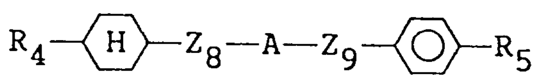

(IV)

wherein

$R_4$ and $R_5$ may be the same or different, and each are as defined by $R_1$ in the formula (I),
A is as defined by A of the formula (I),
$Z_8$ represents -COO-, $-CH_2CH_2-$, -CH=CH- or single bond, and
$Z_9$ represents -COO-, $-CH_2CH_2-$, -CH=CH-, ethynylene group or single bond.

Namely, one of the liquid crystal compositions of the present invention contains the above first component, second component, third component and fourth component.

As the fourth component of the present invention, there is preferably used at least one member of compounds of the formula (IV) wherein

$R_4$ and $R_5$ may be the same or different and each are an alkyl group of 1 to 10C (wherein one or two not-adjacent carbon atom may be substituted by oxygen atom), and
A represents trans-cyclohexane ring or benzene ring (the hydrogen atom of these rings may be substituted by fluorine atom) (other symbols are as defined above).

Preferable concrete examples of compounds expressed by the formula (IV) are as follows:

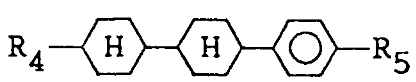

(IV A)

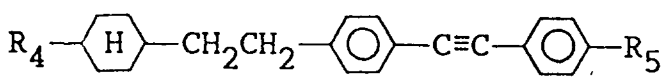

(IV B)

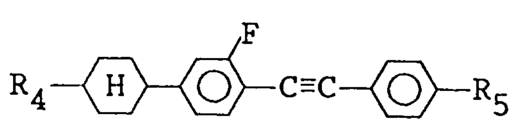

(IV C)

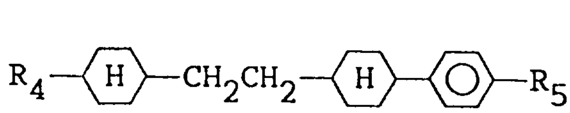

(IV D)

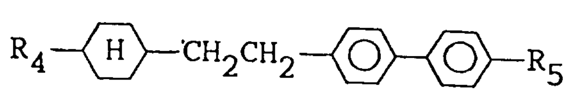

(IV E)

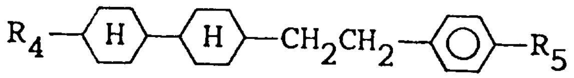

(IV F)

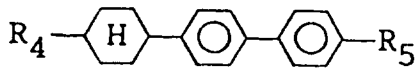

(IV G)

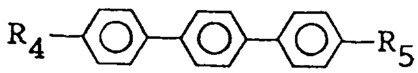

(IV H)

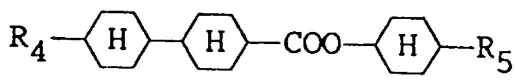

(IV I)

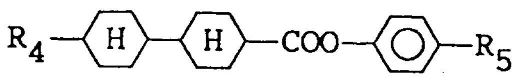

(IV J)

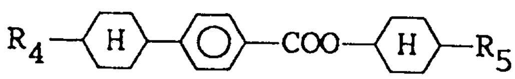

(IV K)

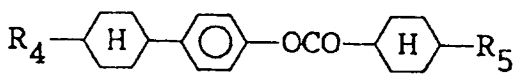

(IV L)

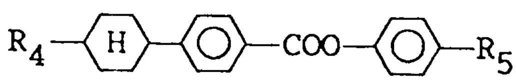

(IV M)

Among the above compounds, the following compounds are preferably used:

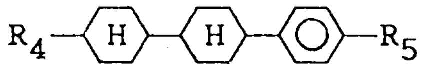

(IV A)

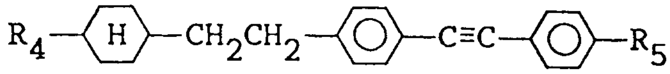

(IV B)

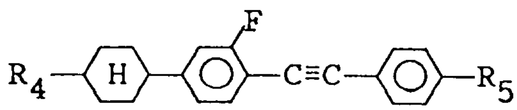

(IV C)

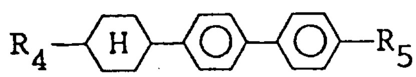

(IV G)

Among the above compounds, those wherein $R_4$ and $R_5$ each represent a linear alkyl group or a linear alkoxy group of 1 to 10C, particularly those wherein $R_4$ and $R_5$ each represent a linear alkyl group or a linear alkoxy group of 1 to 5C, are particularly used.

The compounds expressed by the above formula (IV) are known as disclosed in for example, Japanese patent application laid-open Nos. Sho 57-165328 and Sho 63-152334 and DE 2927277, and have characteristics of a high clearing point, a low viscosity and a neutral dielectric anisotropy. For practical uses, the proportion of these compounds used in the liquid crystal composition of the present invention is suitably 30% by weight or less, taking into account, the increase in the threshold voltage accompanying the addition of these compounds, etc.

The liquid crystal composition of the present invention may contain the following fifth component, besides the above first component, second component, third component and fourth component:

Fifth component

At least one member of compounds expressed by the formula (V):

$R_6$-A-$Z_{10}$-B-$R_7$

wherein

- $R_6$ and $R_7$ may be the same or different and each are as defined by $R_1$ of the formula (I),
- A is as defined by A of the formula (I),
- B is as defined by B of the formula (I),
- $Z_{10}$ represents -COO-, $-CH_2CH_2-$, -CH = CH-, ethynylene group or single bond.

Namely, one of the liquid crystal composition of the present invention contains the above first component, second component, third component, fourth component and fifth component.

As the fourth component of the present invention, there is preferably used at least one member of compounds of the above formula (V) wherein

- $R_6$ and $R_7$ may be the same or different and each represent an alkyl group of 1 to 10C (one or two not-adjacent carbon atoms in this group may be oxygen atom, -CO- or -COO-),
- A and B may be the same or different, and each represent trans-cyclohexane ring or benzene ring (one or two =CH-s in these rings may be substituted by nitrogen atom, and the hydrogen atom in the rings may be substituted by fluorine atom) (other symbols are as defined above).

Preferable concrete examples of the compounds expressed by the formula (V) are as follows:

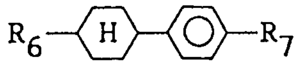

(VA)

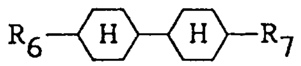

(VB)

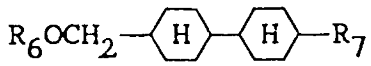

(VC)

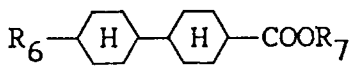

(VD)

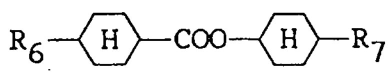

(VE)

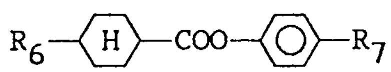

(VF)

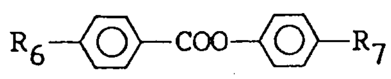

(VG)

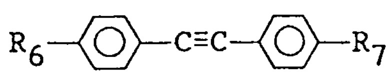

(VH)

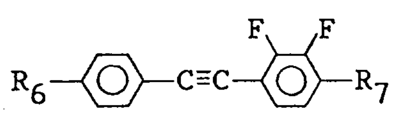

(VI)

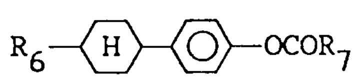

(VJ)

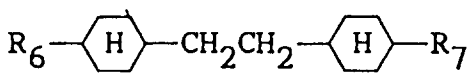

(VK)

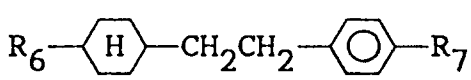

(VL)

Among the above compounds, the following compounds are preferably used:

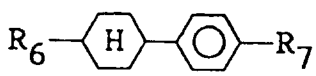

(VA)

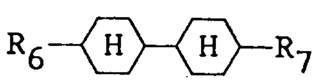

(VB)

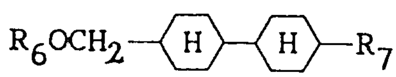

(VC)

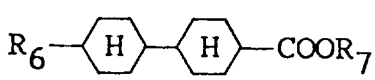

(VD)

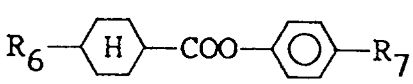

(VF)

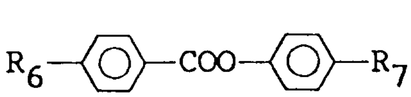

(VG)

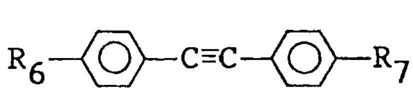

(VH)

Among the above compounds, those wherein $R_6$ and $R_7$ each represent a linear alkyl group or a linear alkoxy group of 1 to 10C, particularly those wherein $R_6$ and $R_7$ each represent a linear alkyl group or a linear alkoxy group of 1 to 5C, are preferably used.

The compounds expressed by the formula (V) are known as disclosed for example, in Japanese patent application laid-open Nos. Sho 59-70624, Sho 58-167535, Sho 58-170733 and Sho 61-5031, DE 2636684 and DE 2429093, and have a very low viscosity, a neutral dielectric anisotropy and a superior compatibility, and much contribute to making the specific resistance of the compositions higher. The practically used proportion of these compounds in the liquid crystal composition of the present invention is suitably 25% by

weight or less, taking into account, the increase in the threshold voltage, etc. accompanying the addition of these compounds.

The liquid crystal composition of the present invention may contain another liquid crystal compound or liquid crystalline compound besides the above first component to fifth component, in a suitable quantity within a range wherein the object of the present invention is not damaged, in order to control the threshold voltage in the voltage-transmittance characteristic, the liquid crystal temperature range, the refractive anisotropy, the dielectric anisotropy, the viscosity, etc. Concrete examples of these compounds are as follows:

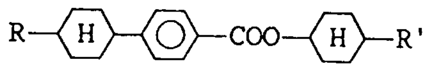

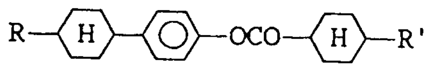

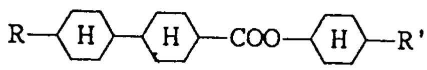

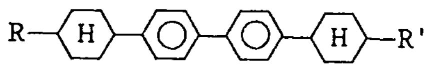

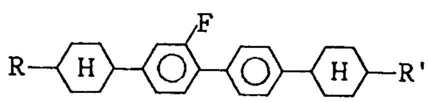

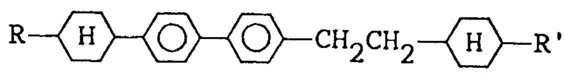

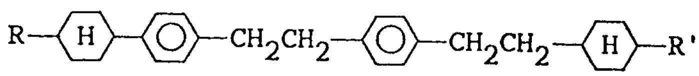

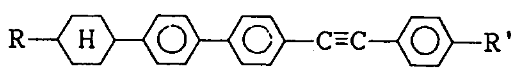

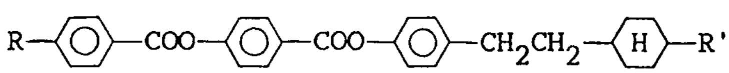

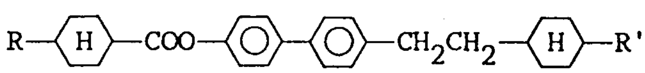

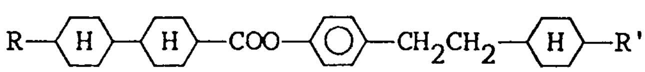

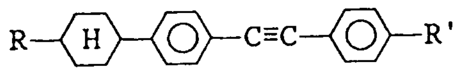

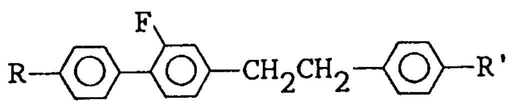

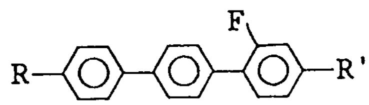

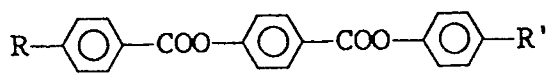

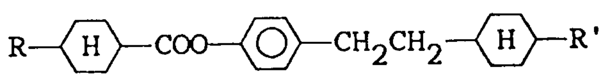

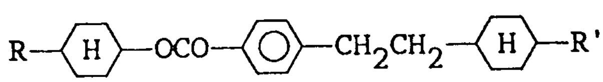

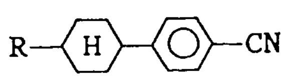

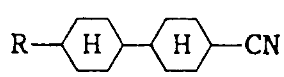

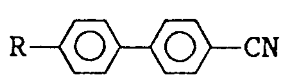

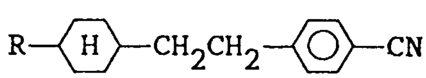

In the above formulas, R and R' each represent an alkyl group or an alkoxy group of 1 to 10C.

The above compounds can be used alone or in an adequate combination of two or more kinds.

In the liquid crystal composition of the present invention containing the above first component and second component, the proportions of the first component and the second component used, each are 15 to 97% by weight and 3 to 30% by weight, preferably 30 to 90% by weight and 5 to 25% by weight, based

upon the total weight of the composition, and the total quantity of these components is at least 50% by weight, preferably at least 60% by weight.

As another embodiment of the present invention, the proportions of the first component, second component and third component used in the liquid crystal composition containing the first component, second component and third component are respectively 15 to 97% by weight, 3 to 30% by weight and 5 to 90% by weight, preferably 30 to 90% by weight, 5 to 25% by weight and 5 to 55% by weight, based upon the total weight of the liquid crystal composition, and the total quantity of these components is at least 50% by weight, preferably at least 60% by weight.

As still another embodiment of the present invenion, the proportions of the first component, second component, third component and fourth component used in the liquid crystal composition containing the first component, second component, third component and fourth component, are respectively 15 to 97% by weight, 3 to 30% by weight, 5 to 90% by weight and 3 to 30% by weight, preferably 30 to 90% by weight, 5 to 25% by weight, 5 to 55% by weight and 5 to 25% by weight, based upon the total weight of the composition, and the total quantity of these components is at least 50% by weight, preferably at least 70% by weight.

As further still another embodiment of the present invention, the proportions of the first component, second component, third component, fourth component and fifth component used in the liquid crystal composition containing the first component, second component, third component, fourth component and fifth component, are respectively 15 to 97% by weight, 3 to 30% by weight, 5 to 90% by weight, 3 to 30% by weight and 3 to 25% by weight, preferably 30 to 90% by weight, 5 to 25% by weight, 5 to 55% by weight, 5 to 25% by weight and 3 to 20% by weight, based upon the total weight of the composition, and the total quantity of these components is at least 50% by weight, preferably at least 70% by weight.

The liquid crystal composition of the present invention has a characteristic of a low threshold voltage, while retaining a high specific resistance, a low consumed current and a low viscosity. Thus, the liquid crystal composition of the present invention can be preferably used for liquid crystal display element, particularly for AM-LCD.

The liquid crystal display element of the present invention using the liquid crystal composition having the above characteristics has characteristics of a high contrast, a high reliability, a rapid response speed and further a capability of low voltage drive, etc. Thus, it can correspond to a high-grade, moving picture display, mouse and scroll, and it is possible to provide a liquid crystal display device for OA which is easy in the battery drive.

## Example

The present invention will be described in more detail by way of Examples, but it should not be construed to be limited thereto.

In addition, the definitions and measurement methods of various characteristics herein are as follows:

### Threshold voltage (voltage transmittance characteristic)

The threshold voltage refers to a voltage (absorption percentage 10%) wherein the transmittance of light in the optical direction perpendicular to the indicated surface of display, and it is shown by Vth.

### Specific resistance

The specific resistance refers to a value obtained by filling liquid crystals in a liquid cell (type: LE-21) made by Ando Electric Corporation), followed by impressing a dielectric current of 10V with PA meter (made by HP Corporation) and a DC voltage source (type: HP 4140B), and the initial value is represented by $\rho_o$ (Ω cm) and a value obtained after heating test at 80 ° C (1,000 hours) is represented by $\rho_H$ . The liquid crystals for the heating test was preserved in a pylex glass vessel at 80 ° C in nitrogen gas atmosphere. The 1,000 hours as the heating test time is considered to be generally suitable as a time showing a value close to saturation value.

### Signal voltage retention

The signal voltage retention was measured using the circuit shown in Fig. 2, as described above, and calculated according to the following formula:

Signal voltage retention = $(V_1\text{-}t_1\text{-}t_2\text{-}V_2)/[(V_1)\times(t_1\text{-}t_2)]$

wherein $(V_1\text{-}t_1\text{-}t_2\text{-}V_2)$ shows an oblique line portion of Fig. 3,

$V_1$ represents a source voltage, and $(t_1\text{-}t_2)$ represents an impressed time. In addition, the measurement of the signal voltage retension was carried out at room temperature (20 ° C) and 80 ° C.

In addition, as to the reliability test, the light-resistance test, particularly ultraviolet rays-resistance test, was not carried out, considering that the photo-deterioration problem could be solved due to recent development of ultraviolet rays-cutting filter.

All of the liquid crystal compositions in Examples and Comparative examples were prepared using the same recipe. "%" refers to "% by weight".

Comparative example a

Herein, the first component (compound of the formula (I) was not used. A liquid crystal composition consisting of the following components and its characteristics were measured and the results are shown in Table 3:

as the compounds of the formula (II),

(a difluorophenylcyclohexane)

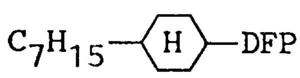 12.0 %

as the compounds of the formula (III),

(difluorophenylcyclohexanes)

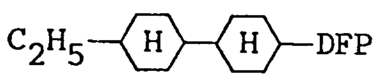 11.7 %

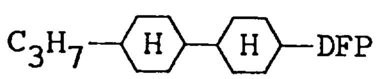 11.7 %

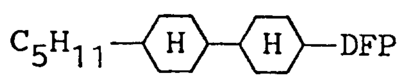 11.7 %

(difluorophenylcyclohexylethanes)

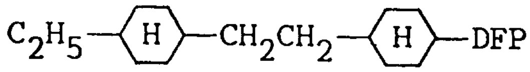

11.2 %

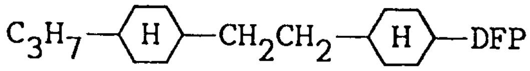

5.6 %

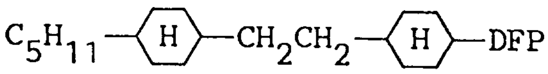

11.2 %

(difluorobiphenylcyclohexanes)

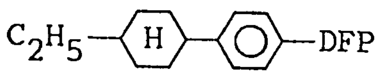

5.0 %

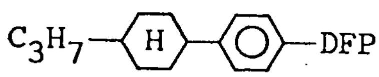

5.0 %

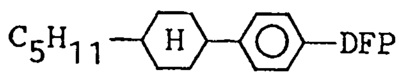

10.0 %

(a fluorophenylcyclohexane)

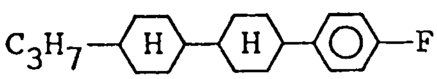

5.0 %

Comparative example b

Herein, the first component (compound of the formula (I)) was not used.

A liquid crystal composition consisting of the following components and its characteristics were measured, and the results are shown in Table 3:

As the compound of the formula (II),

(a difluorophenylcyclohexane)

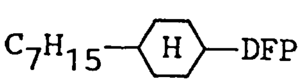

10.0%

as the compounds of the formula (III),

(difluorophenylbicyclohexanes)

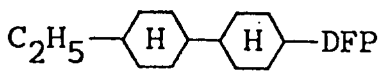 10.0 %

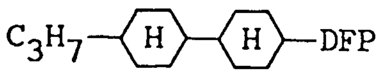 10.0 %

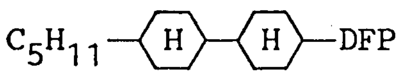 10.0 %

(difluorobiphenylcyclohexanes)

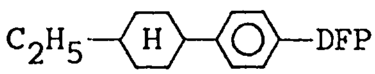 7.0 %

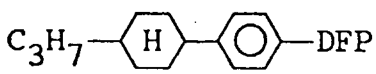 7.0 %

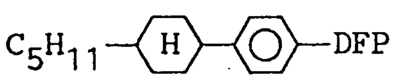 14.0 %

as the compounds of the formula (IV),
(phenylbicyclohexanes)

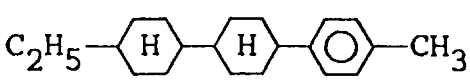 6.0 %

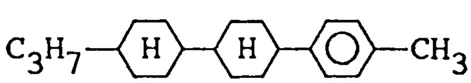 9.0 %

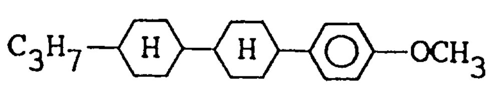 5.0 %

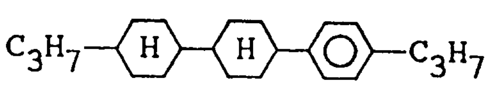 2.0 %

as the compound of the formula (V),
(a phenylcyclohexane)

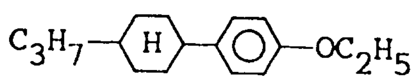

10.0 %

Comparative example c

Herein, the first component (compound of the formula (I)) and the second component (compound of the formula (II)) were not used.

A liquid crystal composition consisting of the following compounds were prepared and its characteristics were measured, and the results are shown in Table 3:

as the compounds of the formula (III),
(difluorophenylcyclohexanes)

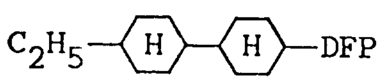

16.7 %

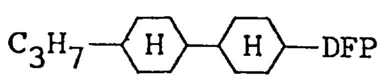

16.7 %

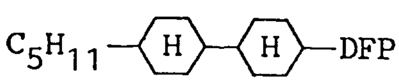

16.7 %

(a fluorophenylbicyclohexane)

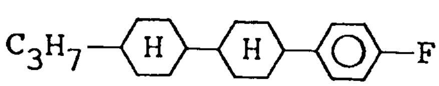

6.0 %

(bicyclohexylcarboxylic acid fluorophenyl esters),

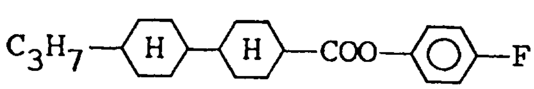

6.0 %

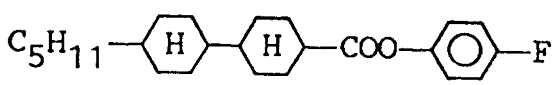

6.0 %

as the compounds of the formula (IV),
(phenylbicyclohexanes),

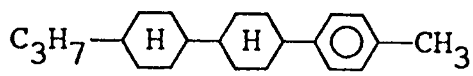

6.0 %

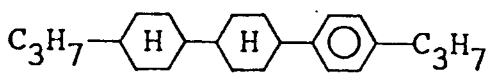

11.0 %

as another compound,

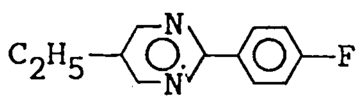

15.0 %

Comparative example d

Herein, the first component (compound of the formula (I)) was not used.

A liquid crystal composition consisting of the following compounds was prepared and its characteristics were measured, and the results are shown in Table 3:

as the compounds of the formula (II),

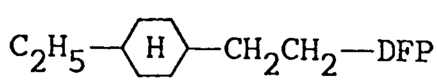

10.0 %

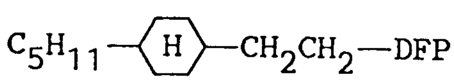

10.0 %

as the compounds of the formula (III),

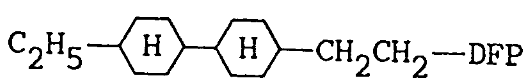

28.0 %

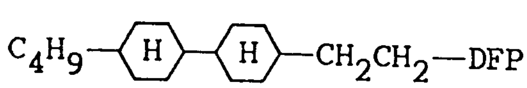

6.0 %

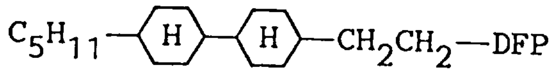 6.0 %

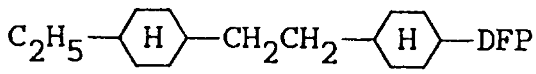 22.0 %

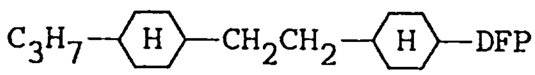 8.4 %

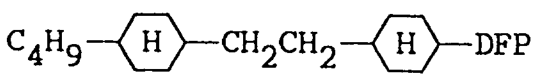 9.6 %

Comparative example e

Herein, the first component (compounds of the formula (I)) was not used.

A liquid crystal composition consisting of the following compounds was prepared and its characteristics were measured, and the results are shown in Table 3:

As the compound of the formula (II),

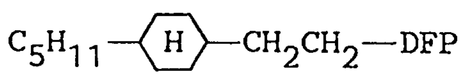 10.0 %

as the compounds of the formula (III),

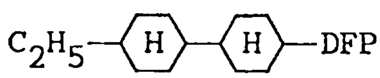 8.4 %

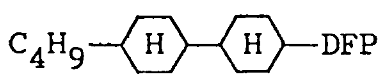 8.3 %

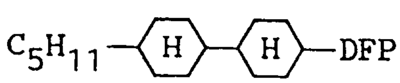 8.3 %

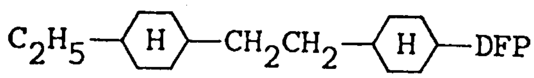 24.8 %

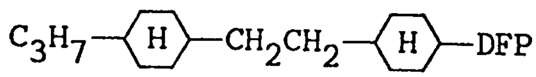 9.4 %

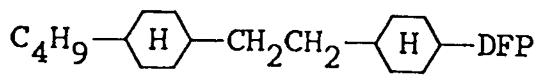 10.8 %

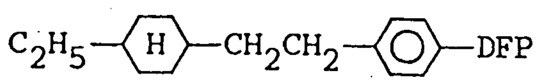 10.0 %

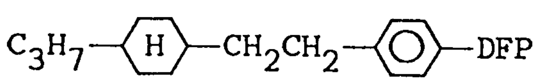 10.0 %

Comparative example f

Herein, the second component (compound of the formula (II)) was not used.

A liquid crystal composition consisting of the following compounds was prepared and its characteristics were measured, and the results are shown in Table 3:

as the compounds of the formula (I),

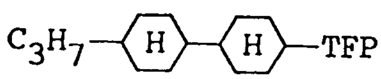 13.0 %

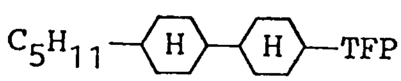 12.0 %

as the compounds of the formula (III),

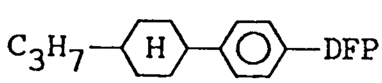 8.0 %

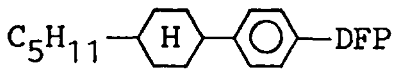

6.0 %

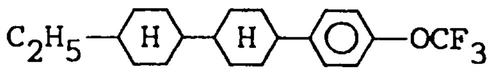

10.0 %

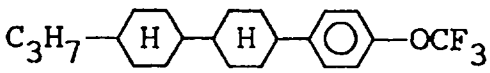

12.0 %

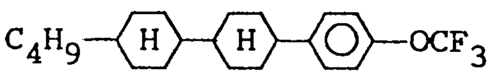

8.0 %

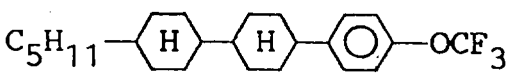

12.0 %

as other components,

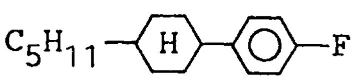

12.0 %

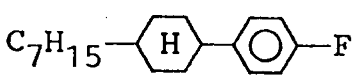

7.0 %

Table 3

| Characteristics \ Example | Comparative examples a | b | c | d | e | f |
|---|---|---|---|---|---|---|
| Clearing point NI (°C) | 82.0 | 95.7 | 106.8 | 78.8 | 74.3 | 78.0 |
| Refractive anisotropy $\Delta n$ | 0.085 | 0.100 | 0.098 | 0.081 | 0.082 | 0.084 |
| Viscosity (20°C) $\eta_{20}$ (cp) | 25.4 | 23.7 | 20.6 | 26.0 | 23.8 | 17.2 |
| Dielectric anisotropy $\Delta\varepsilon$ | 4.7 | 3.5 | 2.9 | 6.6 | 4.5 | 5.4 |
| Threshold voltage $V_{th}$ (V) | 1.92 | 2.14 | 2.41 | 2.03 | 2.16 | 1.87 |
| Initial specific resistance $\rho_O$ (Ωcm) | $1.3 \times 10^{14}$ | $9.8 \times 10^{13}$ | $4.6 \times 10^{13}$ | $1.6 \times 10^{14}$ | $9.9 \times 10^{14}$ | $1.4 \times 10^{14}$ |
| Specific resistance after heated $\rho_H$ (Ωcm) | $4.1 \times 10^{12}$ | $1.7 \times 10^{12}$ | $8.3 \times 10^{11}$ | $4.1 \times 10^{12}$ | $1.6 \times 10^{12}$ | $3.5 \times 10^{12}$ |
| Signal voltage retention (25°C) (%) | 98.7 | 98.4 | 98.1 | 98.4 | 98.4 | 98.2 |
| Signal voltage retention (80°C) (%) | 98.6 | 98.2 | 97.2 | 98.2 | 98.2 | 98.1 |

Comparative example g

Herein, the second component (compounds of the formula (II)) was not used.

A liquid crystal composition consisting of the following compounds were prepared, and its characteristics were measured, and the results are shown in Table 4:

As the second component (compounds of the formula (II)),

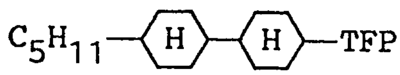 12.0 %

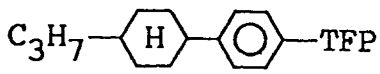 14.0 %

as the compounds of the formula (III),

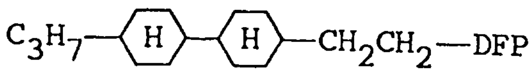 12.0 %

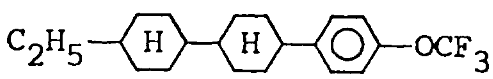 10.0 %

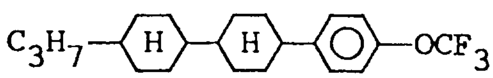 12.0 %

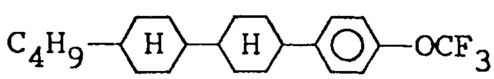 8.0 %

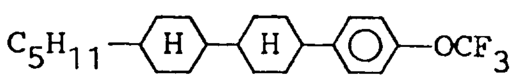 12.0 %

as other compounds,

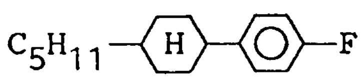 12.0 %

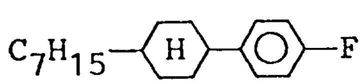 8.0 %

Table 4

| Example / Characteristics | Comparative example | Example | | | |
|---|---|---|---|---|---|
| | g | 1 | 2 | 4 | 6 |
| Clearing point NI (°C) | 77.0 | 42.9 | 46.0 | 71.3 | 91.1 |
| Refractive anisotropy Δn | 0.085 | 0.059 | 0.058 | 0.070 | 0.085 |
| Viscosity (20°C) $\eta_{20}$ (cp) | 17.7 | 22.2 | 21.6 | 19.2 | 17.9 |
| Dielectric anisotropy Δε | 5.4 | 6.1 | 6.1 | 5.1 | 4.7 |
| Threshold voltage $V_{th}$ (V) | 1.83 | 1.07 | 1.17 | 1.77 | 1.98 |
| Initial specific resistance $\rho_0$ (Ωcm) | $1.5 \times 10^{14}$ | $2.5 \times 10^{14}$ | $2.1 \times 10^{14}$ | $1.6 \times 10^{14}$ | $3.1 \times 10^{14}$ |
| Specific resistance after heated $\rho_H$ (Ωcm) | $4.1 \times 10^{12}$ | $9.2 \times 10^{12}$ | $6.7 \times 10^{12}$ | $5.0 \times 10^{12}$ | $9.6 \times 10^{11}$ |
| Signal voltage retention (25°C) (%) | 98.2 | 98.7 | 98.5 | 98.2 | 98.4 |
| Signal voltage retention (80°C) (%) | 98.1 | 98.4 | 98.3 | 98.1 | 98.0 |

Example 1

A liquid crystal composition consisting of the following compounds was prepared, and its characteristics were measured, and the results are shown in Table 4:

as the compounds of the formula (I),

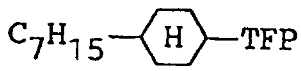

10.0 %

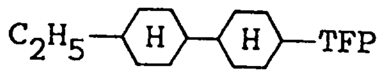

25.0 %

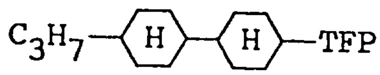

35.0 %

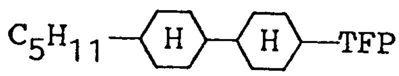

18.0 %

as the compound of the formula (II),

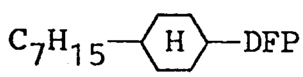

12.0 %

Example 2

A liquid crystal composition consisting of the following compounds was prepared, and its characteristics were measured, and the results are shown in Table 4:

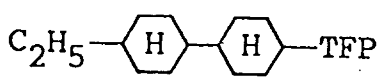

26.0 %

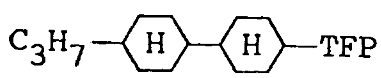

26.0 %

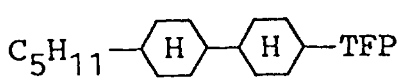

26.0 %

and as the compounds of the formula (II),

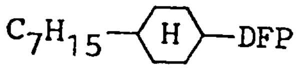

12.0 %

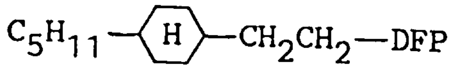

10.0 %

Example 3

A liquid crystal composition consisting of the following compound was prepared: as the compounds of the formula (I),

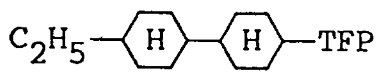

13.0 %

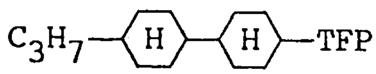

13.0 %

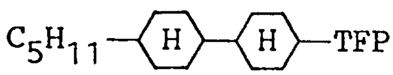

13.0 %

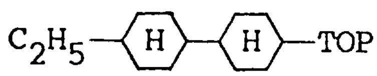

13.0 %

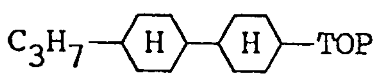

13.0 %

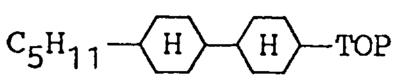

13.0 %

as the compounds of the formula (II),

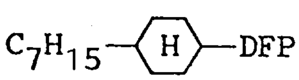

12.0 %

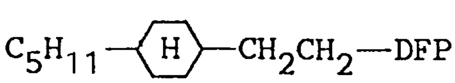

10.0 %

Example 4

A liquid crystal composition consisting of the following compounds was prepared, and its characteristics were measured, and the results are shown in Table 4:

as the compounds of the formula (I),

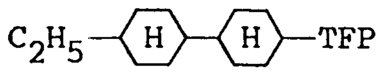

10.0 %

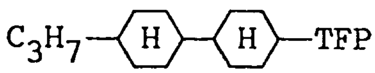

10.0 %

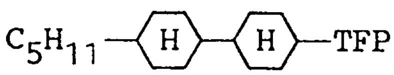

10.0 %

as the compounds of the formula (II)

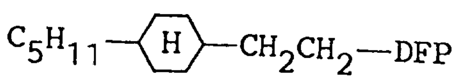

10.0 %

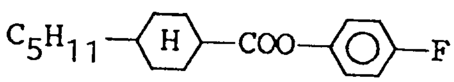

7.5 %

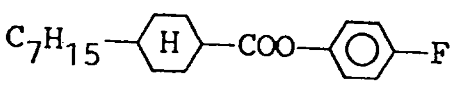

7.5 %

as the compounds of the formula (III),

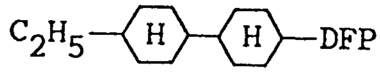 11.7 %

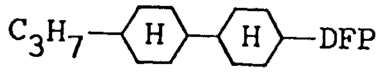 11.7 %

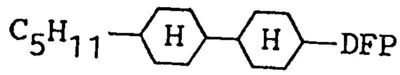 11.6 %

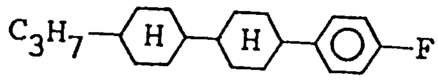 5.0 %

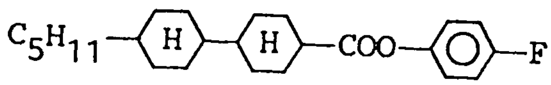 2.5 %

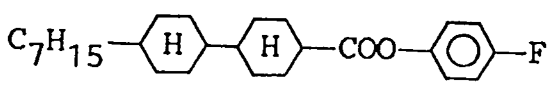 2.5 %

Example 5

A liquid crystal composition consisting of the following compounds was prepared:
as the compounds of the component (I),

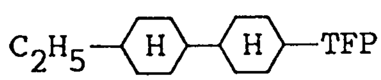 5.0 %

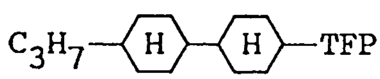 5.0 %

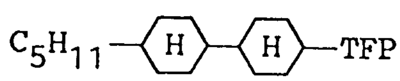 5.0 %

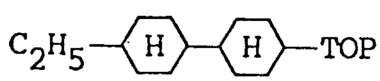 5.0 %

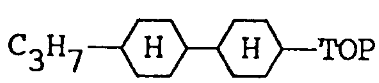 5.0 %

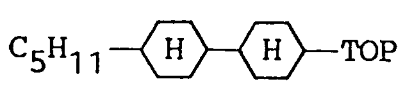 5.0 %

as the compounds of the formula (II),

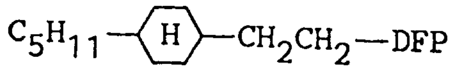

10.0 %

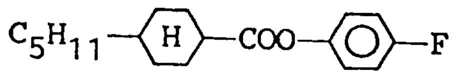

7.5 %

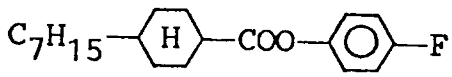

7.5 %

as the compounds of the formula (III),

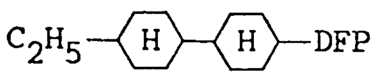

11.7 %

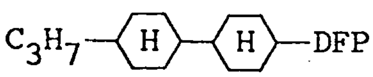

11.7 %

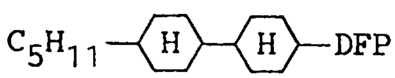

11.6 %

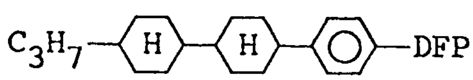

5.0 %

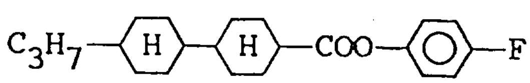

2.5 %

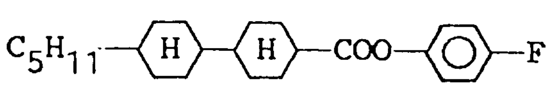

2.5 %

Example 6

A liquid crystal composition consisting of the following compounds was prepared, and its characteristics were measured, and the results are shown in Table 4:
as the compounds of the formula (I),

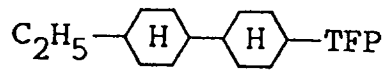 10.0 %

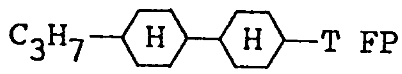 10.0 %

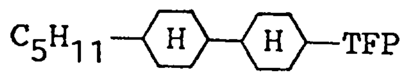 10.0 %

as the compounds of the formula (II),

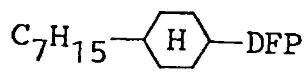 10.0 %

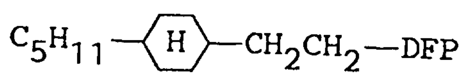 5.0 %

as the compounds of the formula (III)

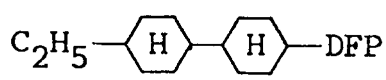 10.0 %

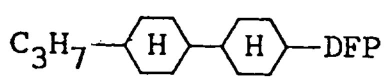 10.0 %

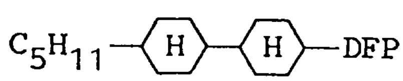 10.0 %

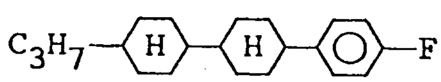 5.0 %

as the compounds of the formula (IV),

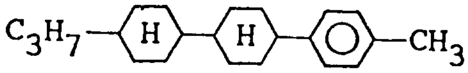

8.0 %

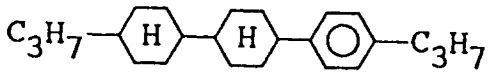

7.0 %

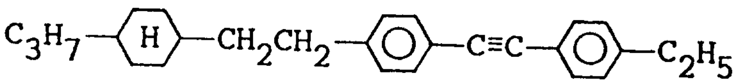

5.0 %

Example 7

A liquid crystal composition consisting of the following compounds was prepared: as the compound of the formula (I),

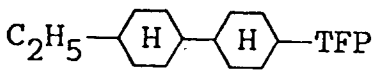

5.0 %

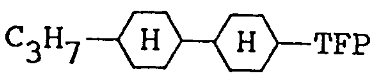

5.0 %

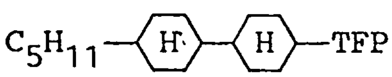

5.0 %

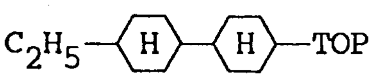

5.0 %

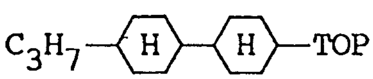

5.0 %

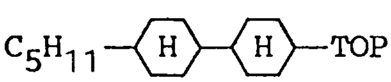

5.0 %

as the compounds of the formula (II),

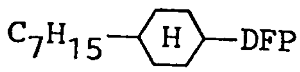 10.0 %

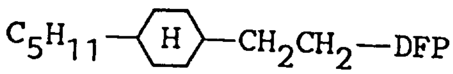 5.0 %

as the compounds of the formula (III),

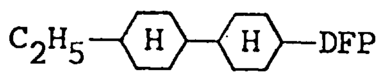 10.0 %

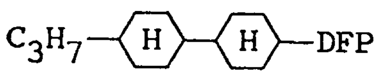 10.0 %

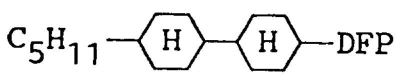 10.0 %

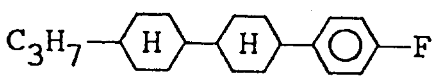 7.0 %

as the compounds of the formula (IV),

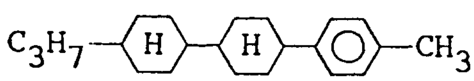 8.0 %

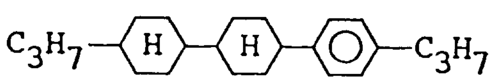 7.0 %

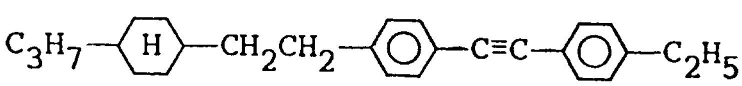 5.0 %

Example 8

A liquid crystal composition consisting of the following compounds was prepared, and its characteristics were measured, and the results are shown in Table 5:

as the compounds of the formula (I),

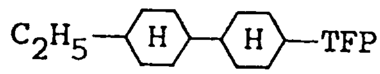

7.0 %

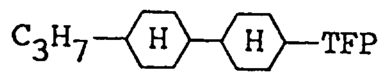

7.0 %

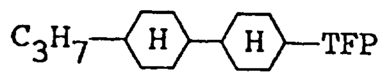

7.0 %

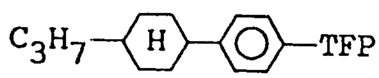

5.0 %

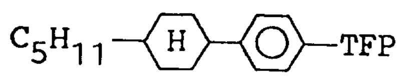

4.0 %

as the compounds of the formula (II),

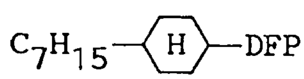

10.0 %

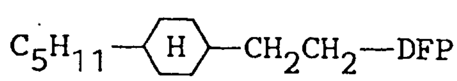

9.0 %

as the compounds of the formula (III),

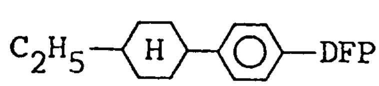

5.0 %

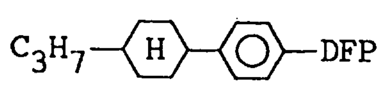

5.0 %

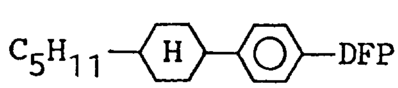

10.0 %

as the compounds of the formula (IV),

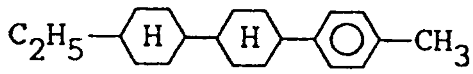 5.0 %

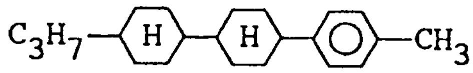 9.0 %

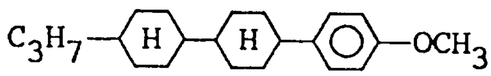 5.0 %

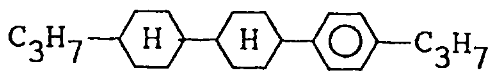 2.0 %

as the compound of the formula (V),

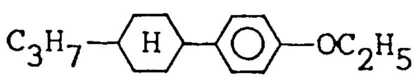 10.0 %

Example 9

A liquid crystal composition consisting of the following compounds was prepared:
as the compounds of the formula (I),

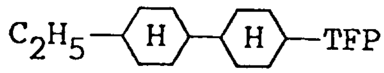 4.0 %

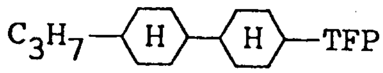 4.0 %

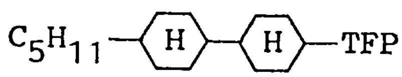 4.0

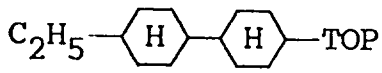 3.0 %

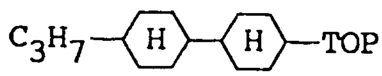 3.0 %

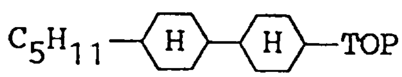 3.0 %

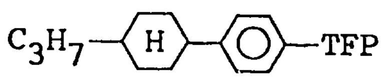 5.0 %

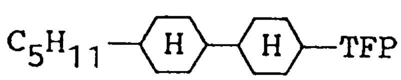 4.0 %

as the compounds of the formula (II),

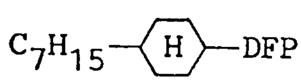 10.0 %

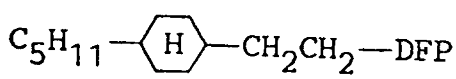 9.0 %

as the compounds of the formula (III),

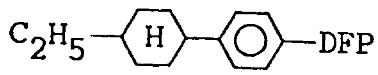

5.0 %

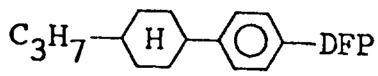

5.0 %

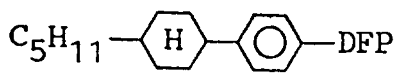

10.0 %

as the compounds of the formula (IV)

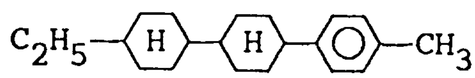

5.0 %

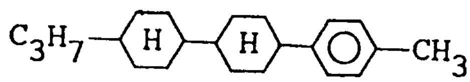

9.0 %

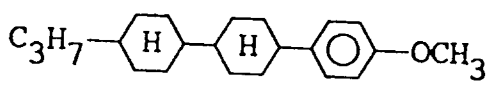

5.0 %

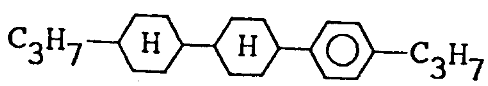

2.0 %

as a compound of the formula (V)

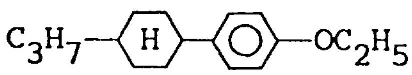

10.0 %

Example 10

A liquid crystal composition consisting of the following compounds was prepared, and its characteristics were measured, and the results are shown in Table 5:

as the compounds of the formula (I),

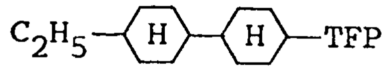

15.0 %

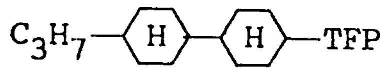

15.0 %

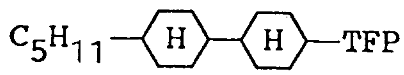

15.0 %

as a compound of the formula (II),

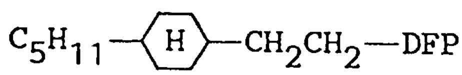

16.0 %

as the compounds of the formula (III),

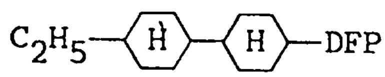

5.0 %

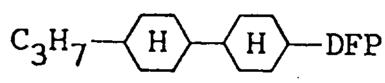

5.0 %

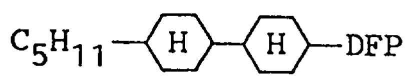

5.0 %

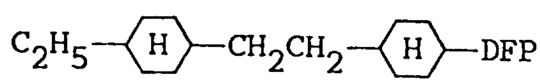

2.0 %

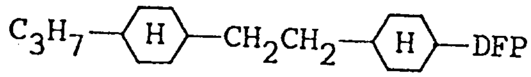 1.0 %

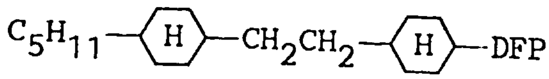 2.0 %

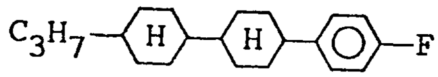 4.0 %

as the compounds of the formula (IV),

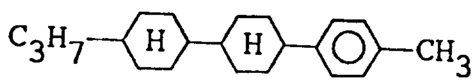 5.5 %

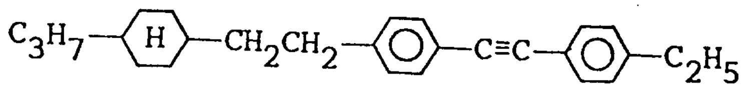 5.0 %

as the compound of the formula (V)

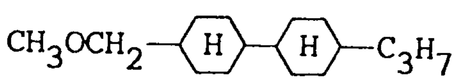 5.0 %

Table 5

| Example / Characteristics | Example 8 | 10 | 12 | 14 |
|---|---|---|---|---|
| Clearing point NI (°C) | 71.1 | 74.4 | 89.0 | 77.1 |
| Refractive anisotropy Δn | 0.092 | 0.079 | 0.106 | 0.097 |
| Viscosity (20°C) $\eta_{20}$ (cp) | 17.4 | 18.0 | 18.9 | 16.5 |
| Dielectric anisotropy Δε | 3.9 | 5.5 | 4.2 | 3.9 |
| Threshold voltage $V_{th}$ (V) | 2.04 | 1.80 | 2.09 | 2.02 |
| Initial specific resistance $\rho_0$ (Ωcm) | $1.4 \times 10^{14}$ | $3.0 \times 10^{14}$ | $1.0 \times 10^{14}$ | $1.9 \times 10^{14}$ |
| Specific resistance after heated $\rho_H$ (Ωcm) | $4.1 \times 10^{12}$ | $8.2 \times 10^{12}$ | $4.0 \times 10^{12}$ | $5.0 \times 10^{12}$ |
| Signal voltage retention (25°C) (%) | 98.3 | 98.3 | 98.4 | 98.4 |
| Signal voltage retention (80°C) (%) | 98.0 | 98.1 | 98.1 | 98.2 |

Example 11

A liquid crystal composition consisting of the following compounds was prepared: as the compounds of the formula (I),

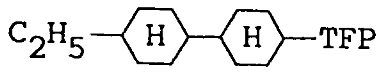 10.0 %

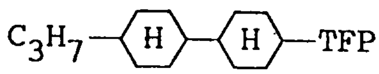 10.0 %

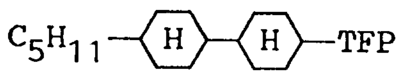 10.0 %

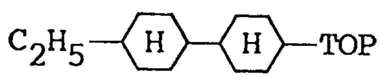 5.0 %

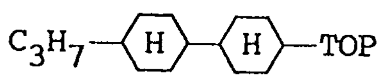 5.0 %

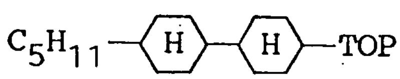 5.0 %

as the compound of the formula (II),

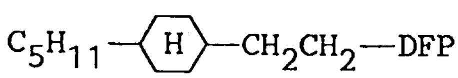 16.0 %

as the compounds of the formula (III),

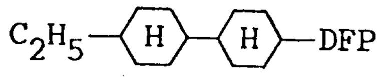 5.0 %

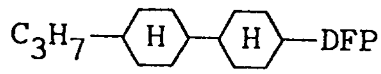 5.0 %

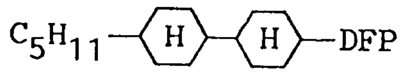 5.0 %

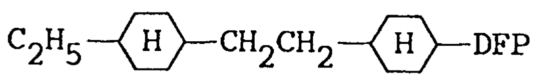 2.0 %

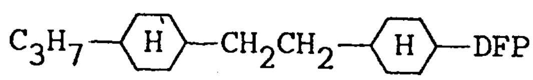 1.0 %

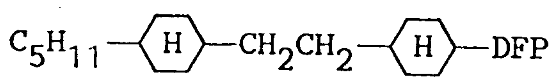 2.0 %

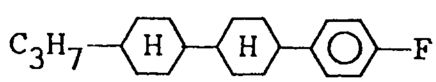 4.0 %

as the compounds of the formula (IV)

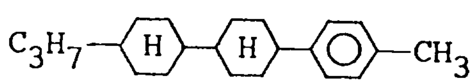 5.0 %

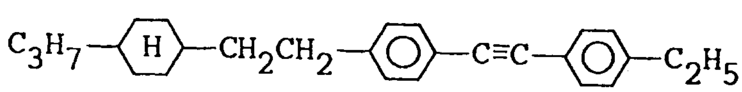 5.0 %

as the compound of the formula (V),

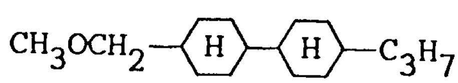 5.0 %

Example 12

A liquid crystal composition consisting of the following compounds was prepared, and its characteristics were measured, and the results are shown in Table 5:

as the compounds of the formula (I),

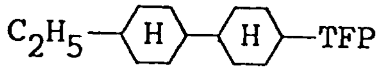 10.0 %

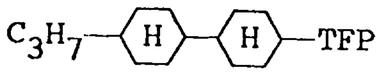 10.0 %

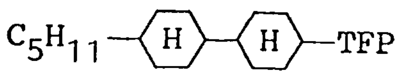 10.0 %

as the compounds of the formula (II),

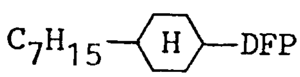 5.0 %

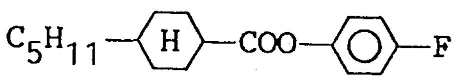 2.5 %

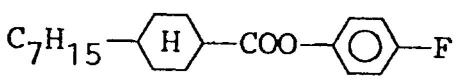 2.5 %

as the compounds of the formula (III),

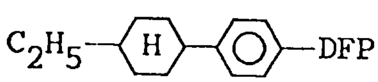 4.5 %

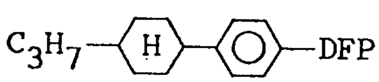 4.5 %

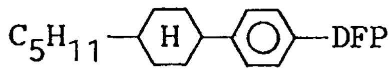 9.0 %

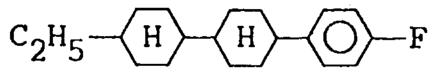 3.0 %

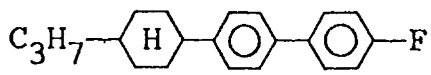 4.0 %

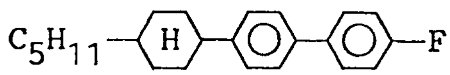 3.0 %

as the compounds of the formula (IV),

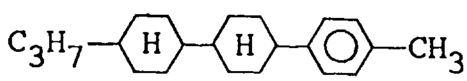 9.0 %

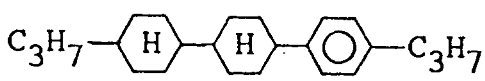 3.0 %

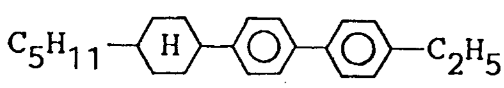 10.0 %

as the compound of the formula (V),

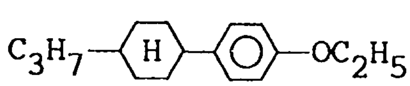 10.0 %

Example 13

A liquid crystal composition consisting of the following compounds was prepared:
as the compounds of the formula (I),

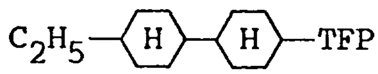 5.0 %

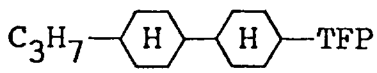 5.0 %

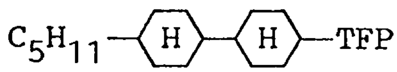 5.0 %

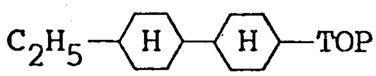 5.0 %

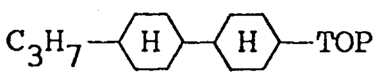 5.0 %

as the compounds of the formula (II),

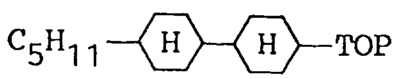 5.0 %

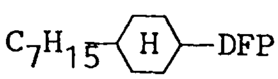 5.0 %

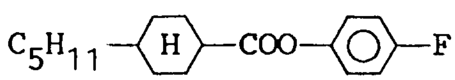 2.5 %

as the compounds of the formula (III),

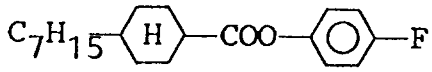 2.5 %

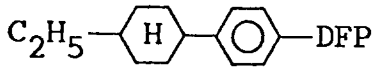 4.5 %

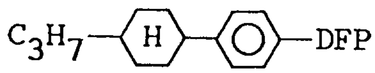 4.5 %

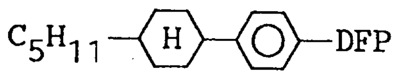 9.0 %

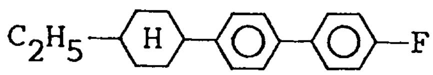 3.0 %

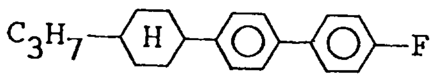 4.0 %

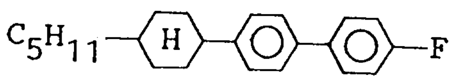 3.5 %

as the compounds of the formula (IV),

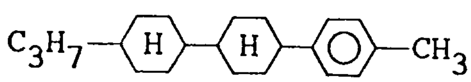 9.0 %

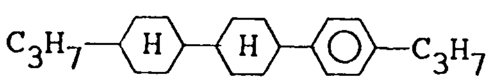 3.0 %

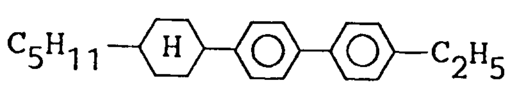 10.0 %

as a compound of the formula (V),

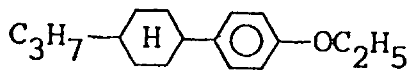

10.0 %

Example 14

A liquid crystal composition consisting of the following compounds was prepared, and its characteristics were measured, and the results are shown in Table 5:

as the compounds of the formula (I),

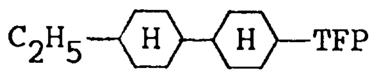

10.0 %

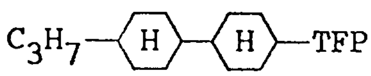

10.0 %

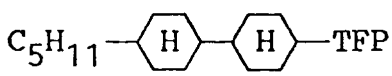

10.0 %

as the compounds of the formula (II),

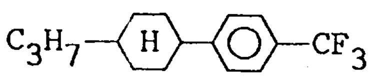

3.0 %

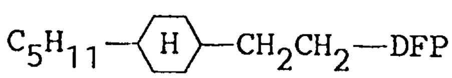

10.0 %

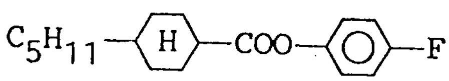

2.2 %

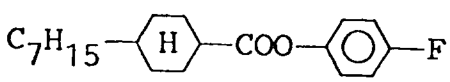

2.2 %

as the compounds of the formula (III),

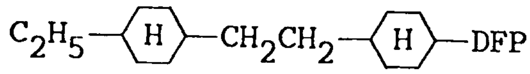 4.4 %

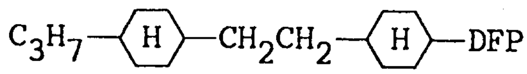 2.0 %

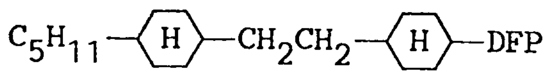 4.0 %

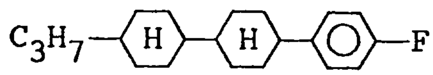 4.0 %

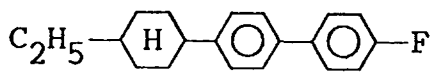 3.0 %

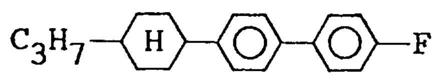 4.0 %

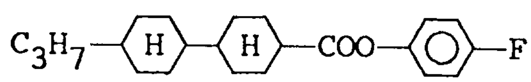 0.8 %

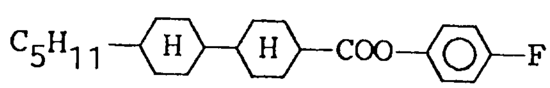 0.8 %

as the compounds of the formula (IV),

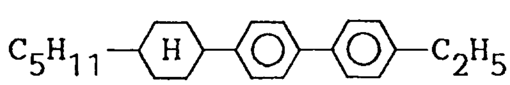 5.0 %

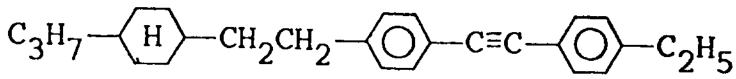

5.0 %

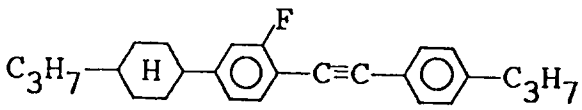

5.0 %

as the compounds of the formula (V),

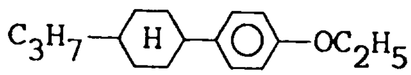

5.0 %

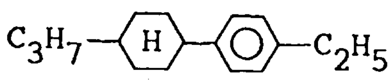

3.0 %

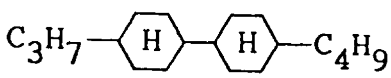

4.0 %

as another compound,

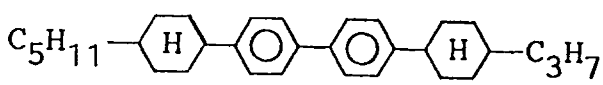

3.0 %

Example 15

A liquid crystal composition consisting of the following compounds was prepared:
as the compounds of the formula (I),

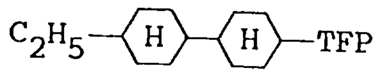 5.0 %

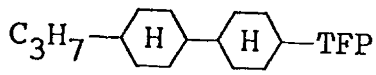 5.0 %

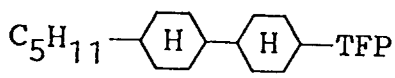 5.0 %

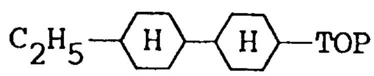 5.0 %

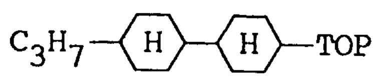 5.0 %

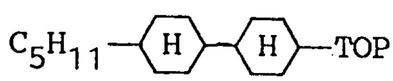 5.0 %

as the compounds of the formula (II),

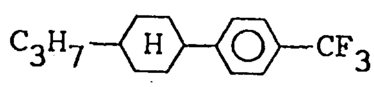 3.0 %

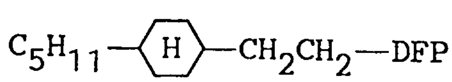 10.0 %

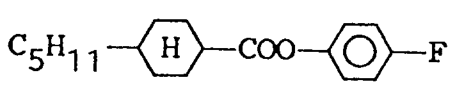 2.2 %

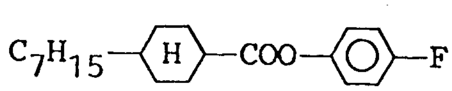 2.2 %

as the compounds of the formula (III),

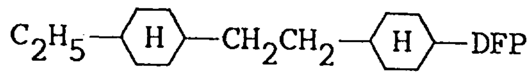 4.0 %

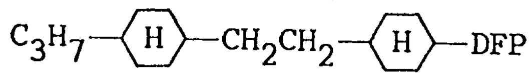 2.0 %

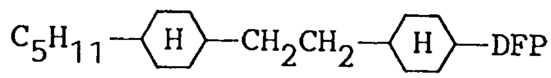 4.0 %

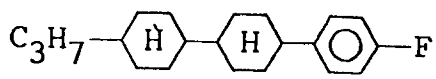 4.0 %

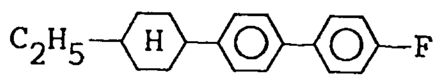 3.0 %

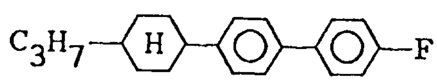 4.0 %

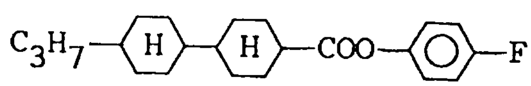 0.8 %

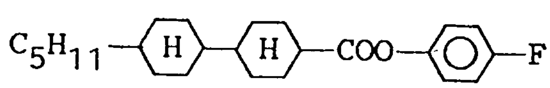 0.8 %

as the compounds of the formula (IV),

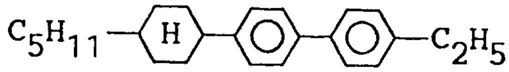

5.0 %

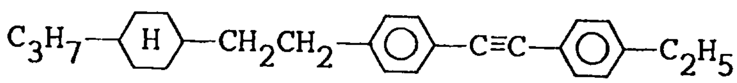

5.0 %

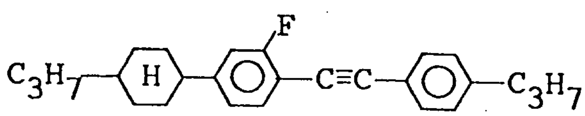

5.0 %

as the compounds of the formula (V),

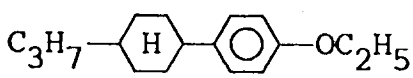

5.0 %

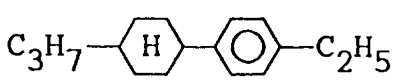

3.0 %

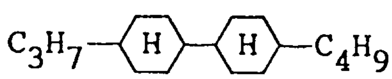

4.0 %

as another compound,

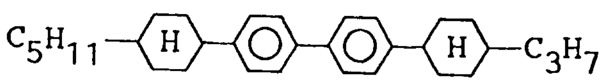

3.0 %

Example 16

A liquid crystal composition consisting of the following compounds was prepared:
as the compounds of the formula (I),

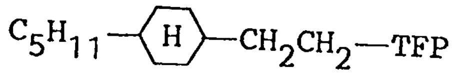

10.0 %

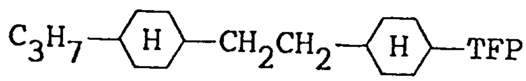

12.0 %

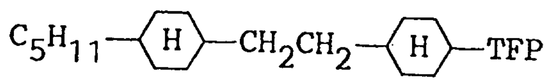

12.0 %

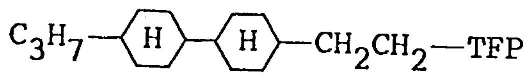

12.0 %

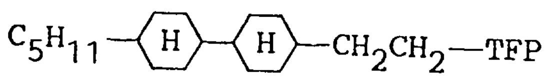

12.0 %

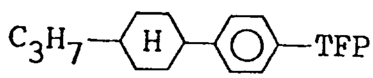

10.0 %

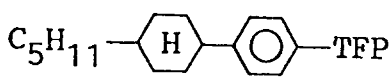

8.0 %

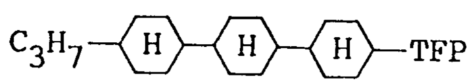

3.0 %

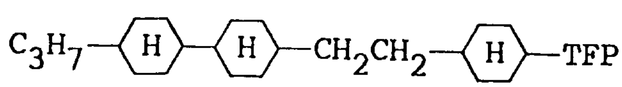

3.0 %

as the compounds of the formula (II),

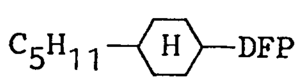

10.0 %

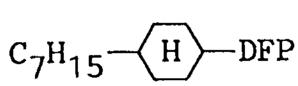

8.0 %

Example 17

A liquid crystal composition consisting of the following compounds was prepared: as the compounds of the formula (I),

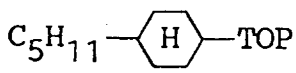 8.0 %

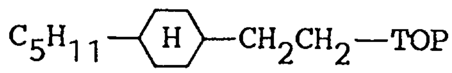 10.0 %

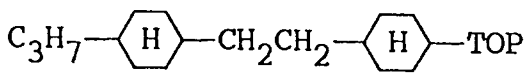 12.0 %

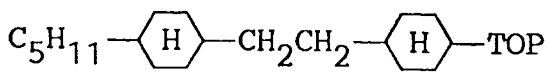 12.0 %

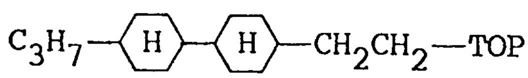 12.0 %

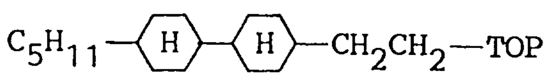 12.0 %

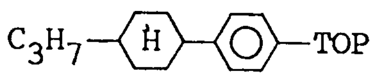 10.0 %

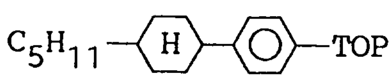 8.0 %

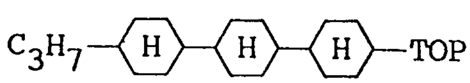 3.0 %

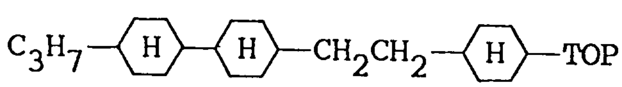 3.0 %

as the compound of the formula (II),

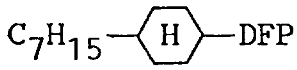 10.0 %

Example 18

A liquid crystal composition consisting of the following compounds was prepared: as the compounds of the formula (I),

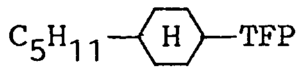 8.0 %

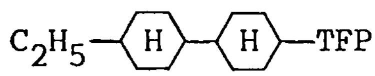 10.0 %

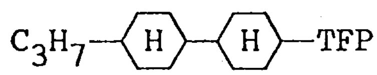 10.0 %

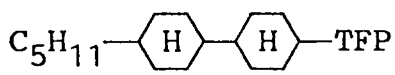 10.0 %

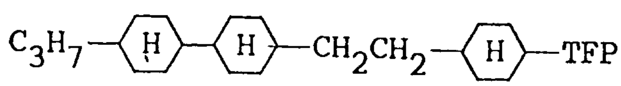 3.0 %

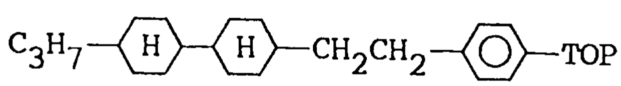 3.0 %

as the compounds of the formula (II),

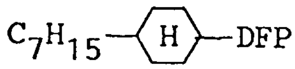 8.0 %

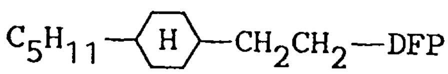 6.0 %

as the compounds of the formula (III),

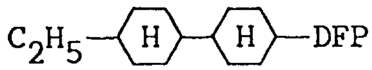 9.3 %

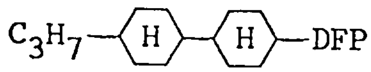 9.4 %

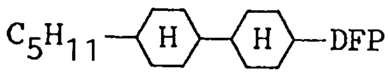 9.3 %

as the compounds of the formula (IV),

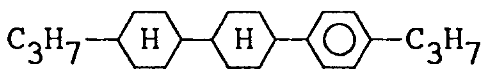 9.0 %

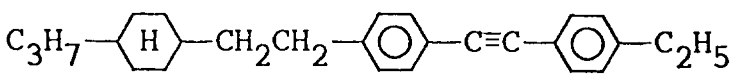 5.0 %

Example 19

A liquid crystal composition consisting of the following compounds was prepared:
as the compounds of the formula (I),

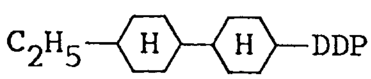 10.0 %

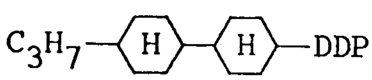 10.0 %

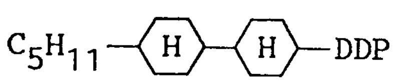 10.0 %

as the compounds of the formula (II),

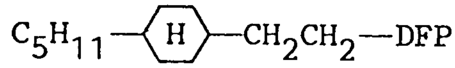

10.0 %

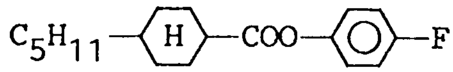

7.5 %

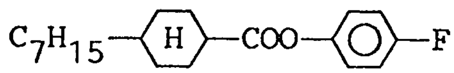

7.5 %

as the compounds of the formula (III),

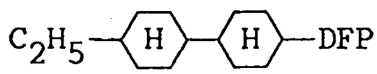

11.7 %

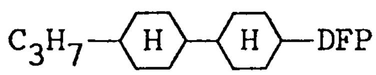

11.7 %

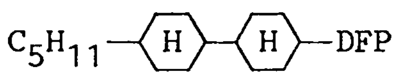

11.6 %

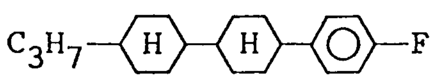

5.0 %

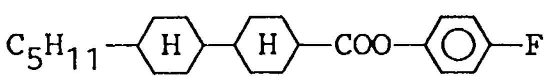

2.5 %

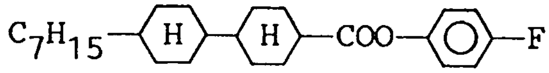

2.5 %

Example 20

A liquid crystal composition consisting of the following compounds was prepared:
as the compounds of the formula (I),

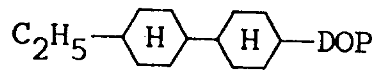

10.0 %

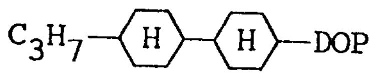

10.0 %

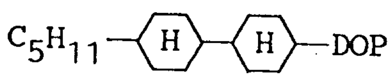

10.0 %

as the compounds of the formula (II),

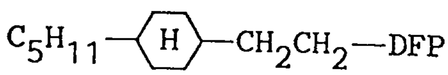

10.0 %

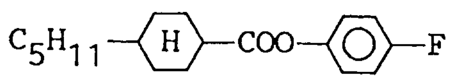

7.5 %

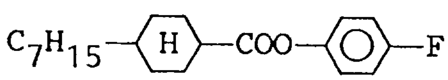

7.5 %

as the compounds of the formula (III),

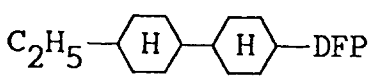

11.7 %

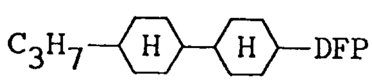

11.7 %

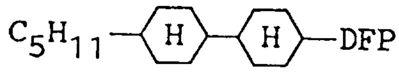 11.6 %

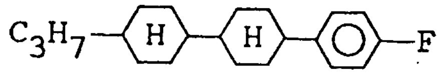 5.0 %

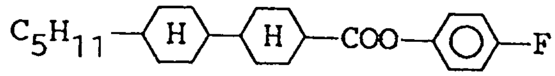 2.5 %

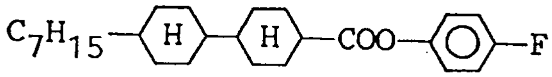 2.5 %

Example 21

A liquid crystal composition consisting of the following compounds was prepared:
as the compounds of the formula (I),

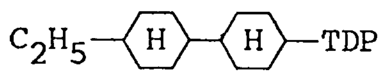 10.0 %

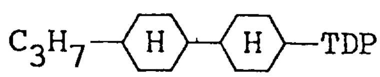 10.0 %

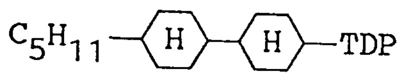 10.0 %

as the compounds of the formula (II),

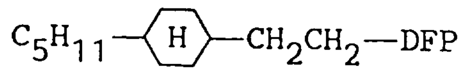 10.0 %

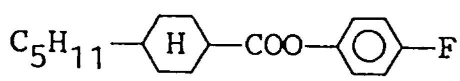 7.5 %

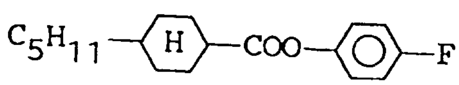 7.5 %

as the compounds of the formula (III),

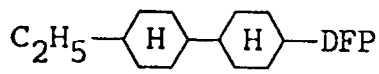 11.7 %

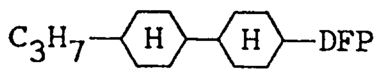 11.7 %

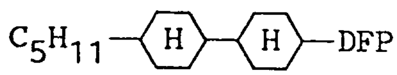 11.6 %

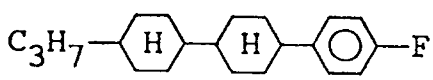 5.0 %

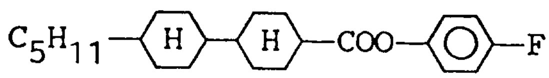 2.5 %

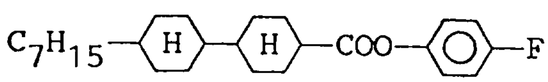 2.5 %

Example 22

A liquid crystal composition consisting of the following compounds was prepared:
as the compounds of the formula (I),

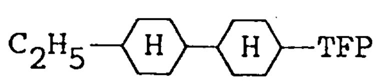 14.2 %

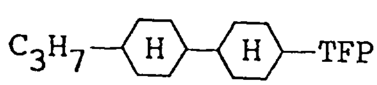 14.2 %

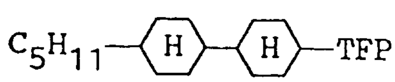 14.2 %

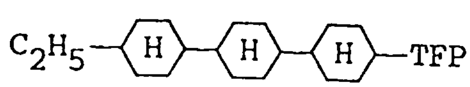 5.0 %

as a compound of the formula (II),

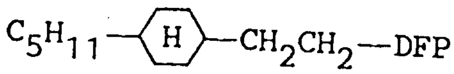 15.2 %

as the compounds of the formula (III)

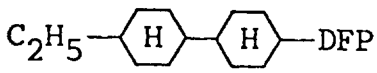 4.7 %

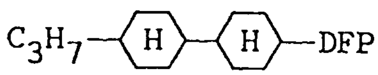 4.8 %

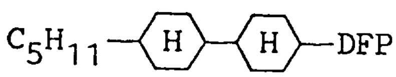 4.8 %

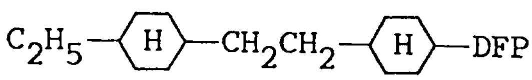 2.0 %

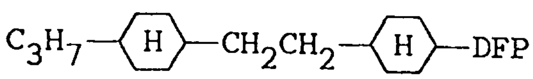 1.0 %

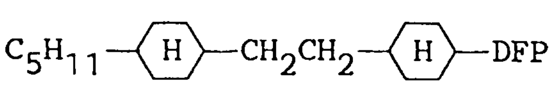 2.0 %

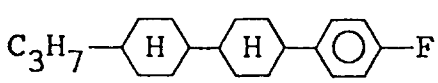 3.8 %

as the compounds of the formula (IV),

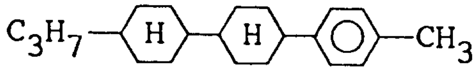 4.7 %

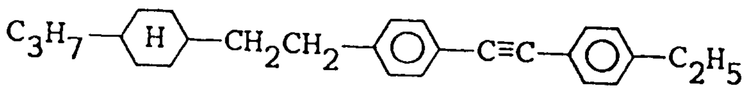 4.7 %

as a compound of the formula (V),

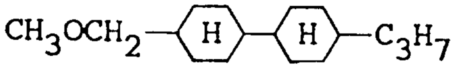 4.7 %

The characteristic values of the liquid crystal composition were as follows:
N-I = 80 ° C, $\Delta\epsilon$ = 5.7, $\Delta n$ = 0.079, viscosity = 20.2 cp and $V_{10}$ = 1.8 volt.

Example 23

A liquid crystal composition consisting of the following compounds was prepared:
as the compounds of the formula (I),

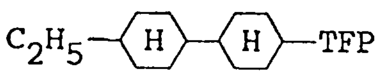 14.3 %

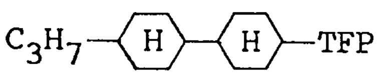 14.3 %

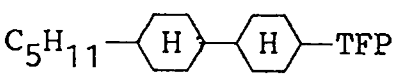 14.3 %

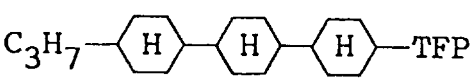 4.0 %

as the compounds of the formula (II),

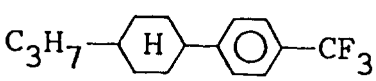 2.7 %

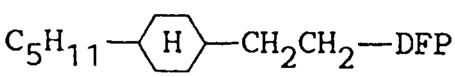 7.7 %

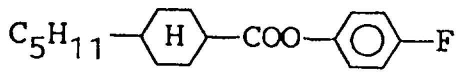 1.8 %

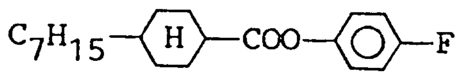 2.0 %

as the compounds of the formula (III),

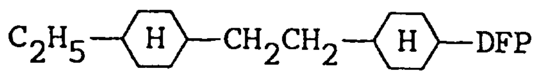 3.0 %

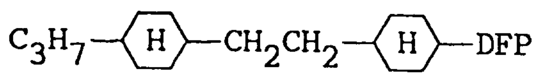 1.5 %

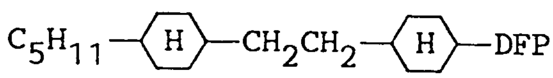 3.0 %

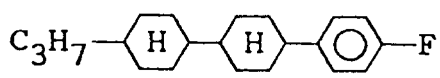 3.0 %

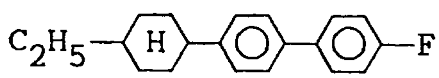 2.2 %

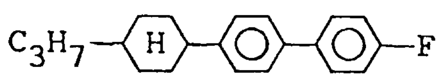 3.0 %

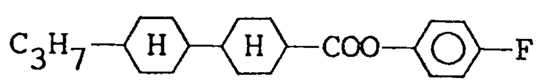 0.6 %

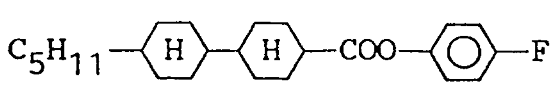 0.6 %

as the compounds of the formula (IV),

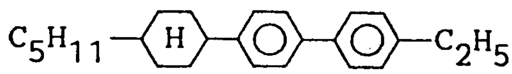 3.7 %

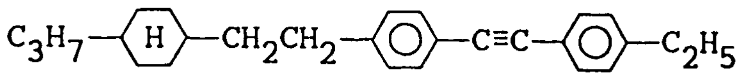 3.7 %

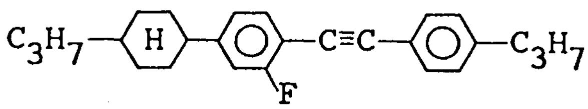 3.8 %

as the compounds of the formula (V),

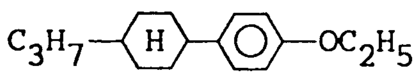 3.8 %

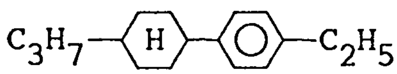 2.2 %

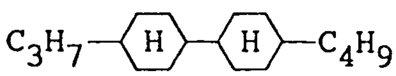 3.0 %

as another compound,

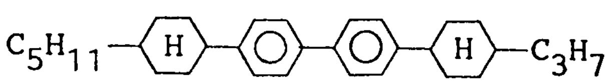 2.2 %

The characteristic values of this liquid crystal composition were as follows:
N-I = 84 °C, $\Delta n$ = 0.093, viscosity = 19.9 cp $\Delta\epsilon$ = 5.1, V = 1.79 V.

Example 24

A liquid crystal composition consisting of the following compounds was prepared:
as the compounds of the formula (I),

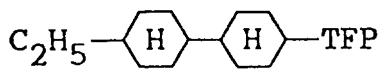 15.5 %

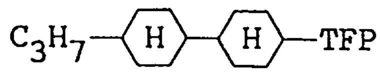 15.5 %

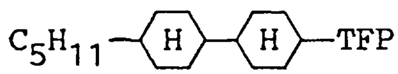 15.5 %

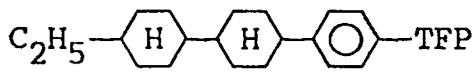 3.9 %

as the compounds of the formula (II),

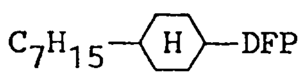 7.1 %

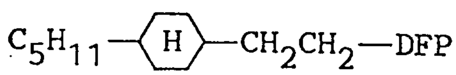 3.5 %

as the compounds of the formula (III),

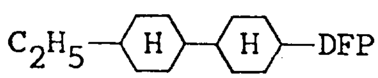 7.1 %

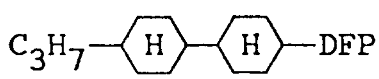 7.1 %

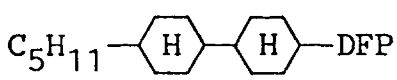 7.1 %

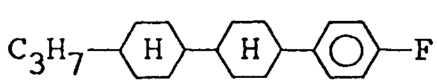 3.5 %

as the compounds of the formula (IV),

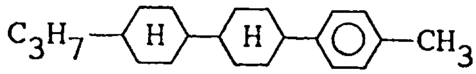 5.7 %

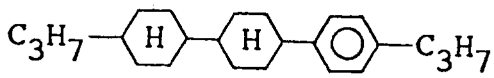 5.0 %

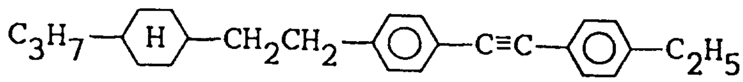 3.6 %

The clearing point of this liquid crystal composition was N-I = 94.2 °C.

Example 25

A liquid crystal composition consisting of the following compounds was prepared:
as the compounds of the formula (I),

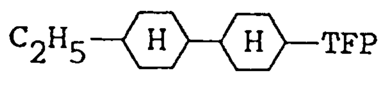 14.2 %

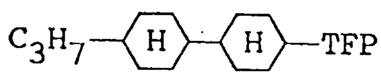 14.2 %

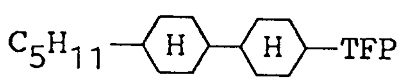 14.2 %

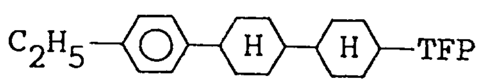 5.0 %

as a compound of the formula (II),

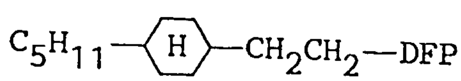 15.2 %

as the compounds of the formula (III),

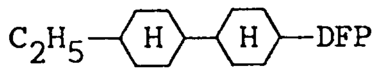

4.7 %

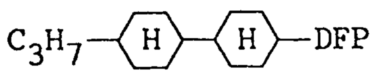

4.8 %

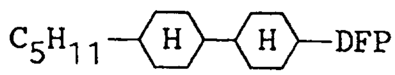

4.8 %

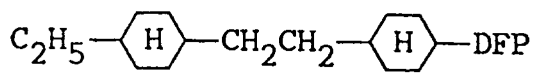

2.0 %

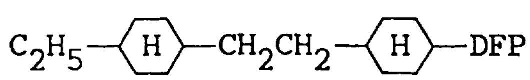

1.0 %

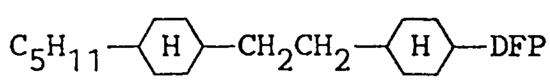

2.0 %

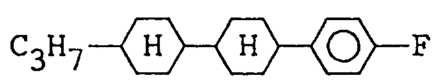

3.8 %

as the compounds of the formula (IV),

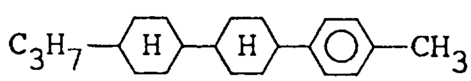

4.7 %

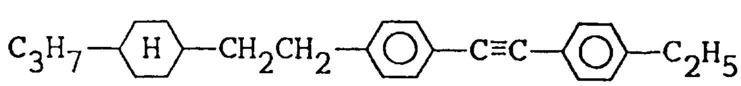

4.7 %

as a compound of the formula (V),

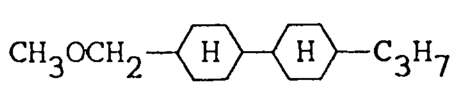

4.7 %

Example 26

A liquid crystal composition consisting of the following compounds was prepared: as the compounds of the formula (I),

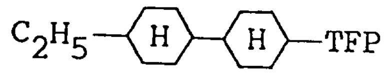

14.3 %

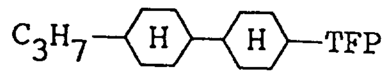

14.3 %

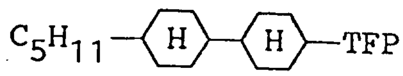

14.3 %

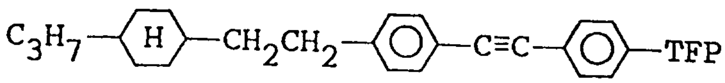

4.0 %

as the compounds of the formula (II),

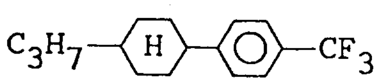

2.3 %

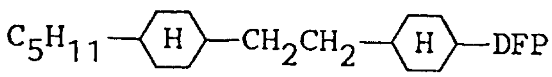

7.7 %

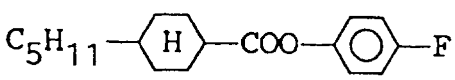

1.8 %

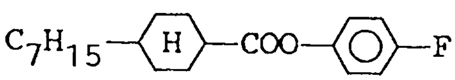

2.0 %

as the compounds of the formula (III),

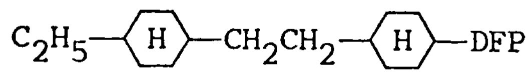

3.0 %

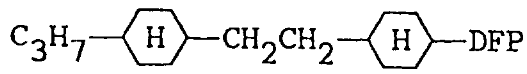

1.5 %

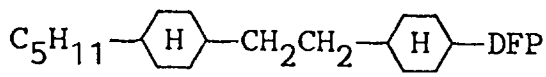

3.0 %

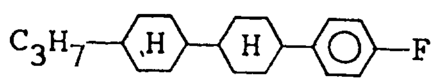

3.0 %

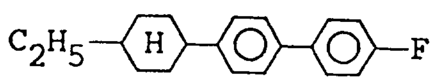

2.2 %

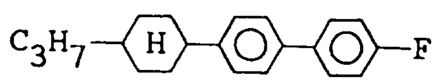

3.0 %

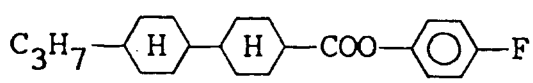

0.6 %

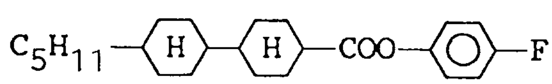

0.6 %

as the compounds of the formula (IV),

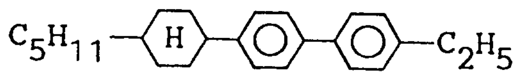

3.7 %

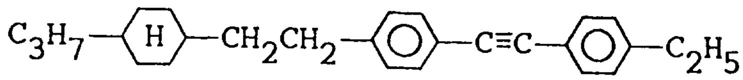

3.7 %

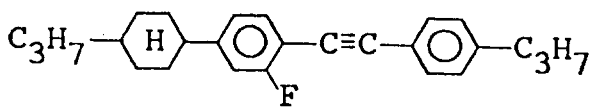

3.8 %

as the compounds of the formula (V),

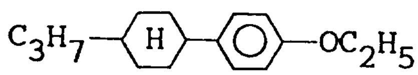

3.8 %

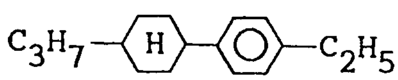

2.2 %

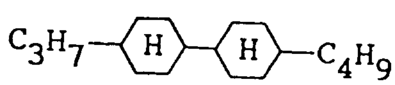

3.0 %

as another compound,

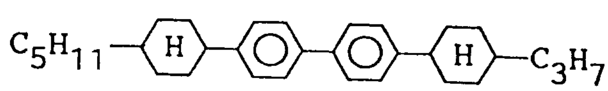

2.2 %

Example 27

A liquid crystal composition consisting of the following compounds was prepared:
as the compounds of the formula (I),

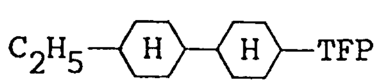

15.5 %

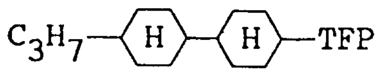 15.5 %

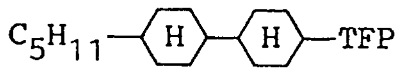 15.5 %

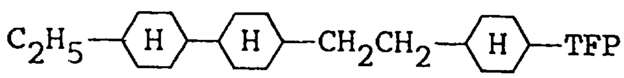 3.8 %

as the compounds of the formula (II),

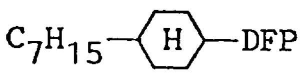 7.1 %

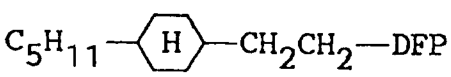 3.5 %

as the compound of the formula (III),

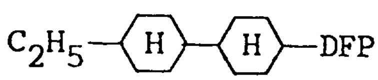 7.1 %

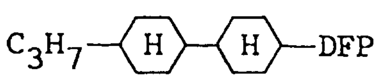 7.1 %

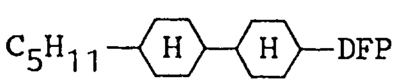 7.1 %

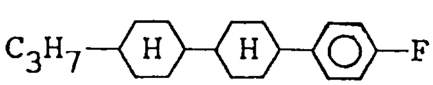 3.5 %

as the compounds of the formula (IV),

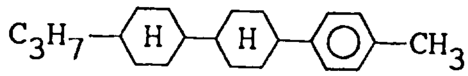 5.7 %

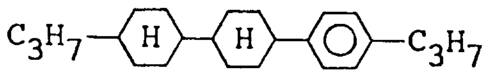 5.0 %

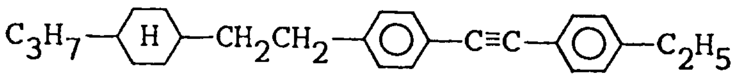 3.6 %

Example 28

A liquid crystal composition consisting of the following compounds was prepared: as the compounds of the formula (I),

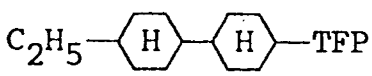 14.3 %

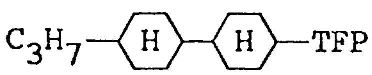 14.3 %

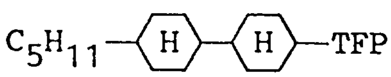 14.3 %

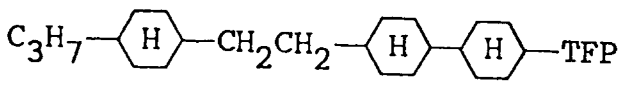 4.0 %

as the compounds of the formula (II),

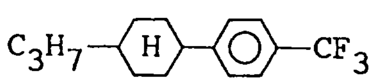 2.3 %

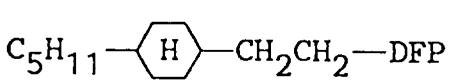 7.7 %

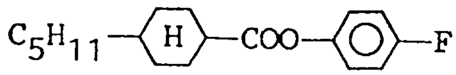 1.8 %

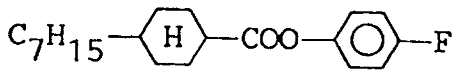 2.0 %

as the compounds of the formula (III),

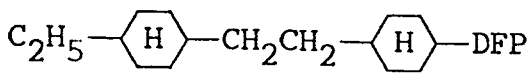 3.0 %

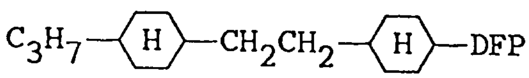 1.5 %

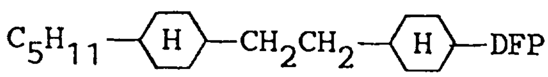 3.0 %

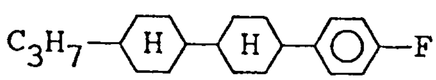 3.0 %

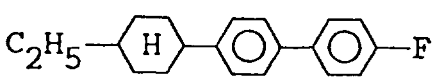 2.2 %

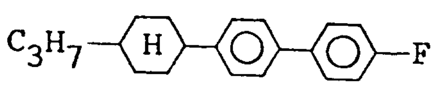 3.0 %

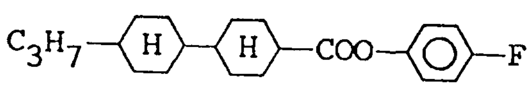 0.6 %

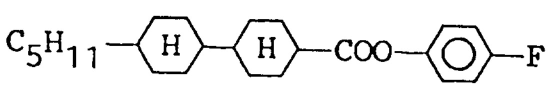 0.6 %

as the compounds of the formula (IV),

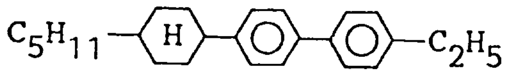

3.7 %

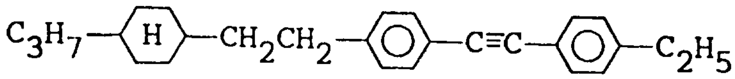

3.7 %

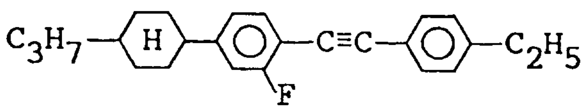

3.8 %

as the compounds of the formula (V),

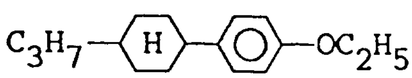

3.8 %

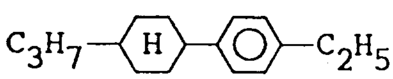

2.0 %

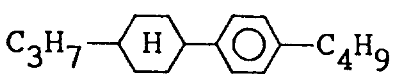

3.0 %

as another compound,

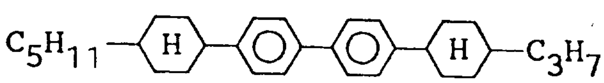

2.2 %

## Claims

1. A liquid crystal composition characterized in that it contains the following first component and second component:

first component

at least one member of compounds expressed by the formula (I):

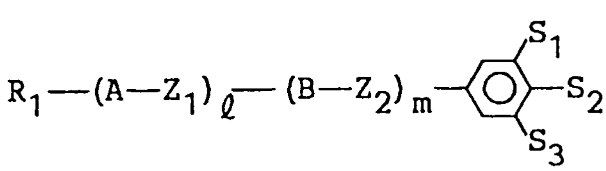

(I)

wherein $R_1$ represents an alkyl group of 1 to 10C or an alkenyl group of 2 to 10C (wherein one or two not-adjacent carbon atoms in these groups may be replaced by oxygen atom, -CO- or -COO-),

$S_1$, $S_2$ and $S_3$ may be the same or different, and each represent F atom, $-CHF_2$, $-OCHF_2$, $-CF_3$ or $-OCF_3$,

$Z_1$ and $Z_2$ may be the same or different, and each represent $-Z_3-(C)_n-Z_4-$ (wherein $Z_3$ and $Z_4$ may be the same or different, and each represent -COO-, $-CH_2CH_2-$, -CH = CH-, ethynylene group or single bond), -COO-, $-CH_2CH_2-$, -CH = CH-, ethynylene group or single bond,

A, B and C may be the same or different, and each represent trans-cyclohexane ring:

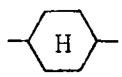

(wherein one or two not-adjacent $-CH_2-$s in this ring may be replaced by oxygen atom), or benzene ring

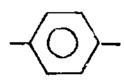

(wherein one or two or more =CH-s in this ring may be replaced by nitrogen atom, and hydrogen atom(s) in this ring may be replaced by fluorine atom(s)),

$\ell$, m and n may be the same or different, and each are 0 or 1, and $\ell + m + n \geqq 1$), and

<u>second component</u>

at least one member of compounds expressed by the formula (II):

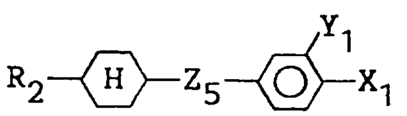

(II)

wherein $R_2$ represent an alkyl group of 1 to 10C or an alkenyl group of 2 to 10C (wherein one or two not-adjacent two carbon atoms in these groups may be replaced by oxygen atom, -CO- or -COO-),

$Z_5$ represents -COO-, $-CH_2CH_2-$, -CH = CH- or single bond,

$X_1$ represents F atom, $-CF_3$, $-OCF_3$ or $-CHF_2$,

$Y_1$ represents H atom or F atom

(wherein, when $Z_5$ represents single bond and $X_1$ represents F, then $Y_1$ cannot be H atom).

**2.** A liquid crystal composition according to claim 1, which further contains the following third component;

<u>third component</u>

at least ore member of compounds expressed by the formula (III)

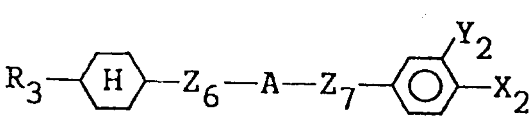

(III)

wherein

$R_3$ is as defined in $R_1$ of the formula (I),

A is as defined in A of the formula (I),

$Z_6$ represents -COO-, $-CH_2CH_2-$, -CH = CH- or single bond,

$Z_7$ represents -COO-, $-CH_2CH_2-$, -CH = CH-, ethynylene group or single bond,

$X_2$ represents F atom, $-CF_3$, $-OCF_3$, $-CHF_2$ or $-OCHF_2$, and

$Y_2$ is as defined in $Y_1$ of the formula (II).

**3.** A liquid crystal composition according to claim 2, which further contains the following fourth component,

fourth component
at least one member of compounds expressed by the formula (IV):

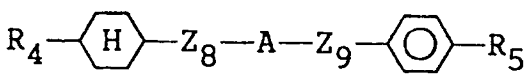

(IV)

wherein $R_4$ and $R_5$ may be the same or different and each are as defined in $R_1$ of the formula (I), A is as defined in A of the formula (I), $Z_8$ represents -COO-, $-CH_2CH_2-$, -CH=CH- or single bond, and $Z_9$ represents -COO-, $-CH_2CH_2-$, -CH=CH-, ethynylene group or single bond.

**4.** A liquid crystal composition according to claim 3, which further contains the following fifth component,
fifth component
at least one member of compounds expressed by the formula (V)

$R_6$ - A - $Z_{10}$ - B - $R_7$

wherein $R_6$ and $R_7$ may be the same or different, and each are as defined in A of the formula (I), B is as defined in B of the formula (I), and $Z_{10}$ represents -COO-, $-CH_2CH_2-$, -CH=CH-, ethynylene group or single bond.

**5.** A liquid crystal display element obtained using a liquid crystal composition according to either one of claims 1 to 4.

FIG. 1

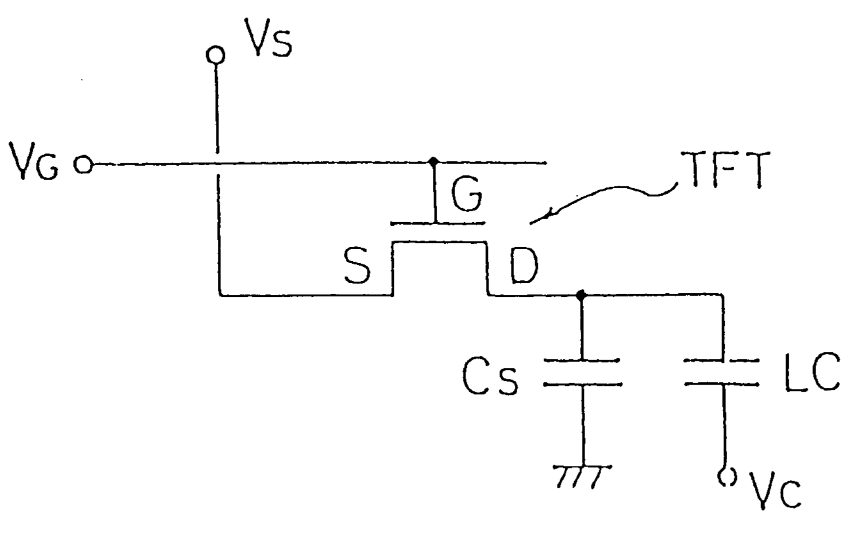

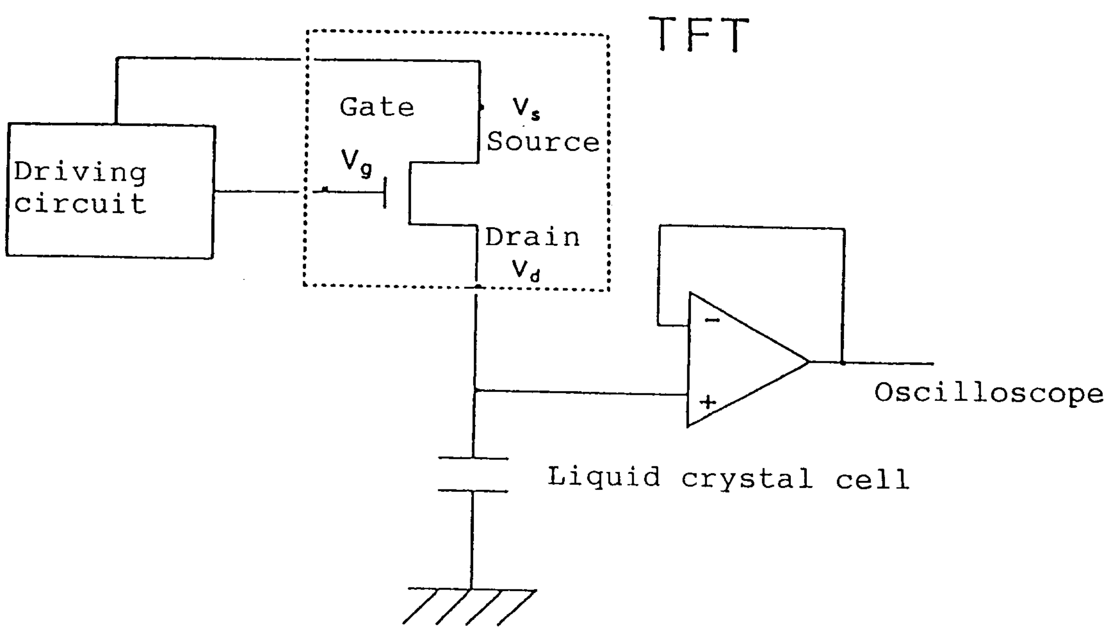


F I G . 2 Circuit for measurement of retention

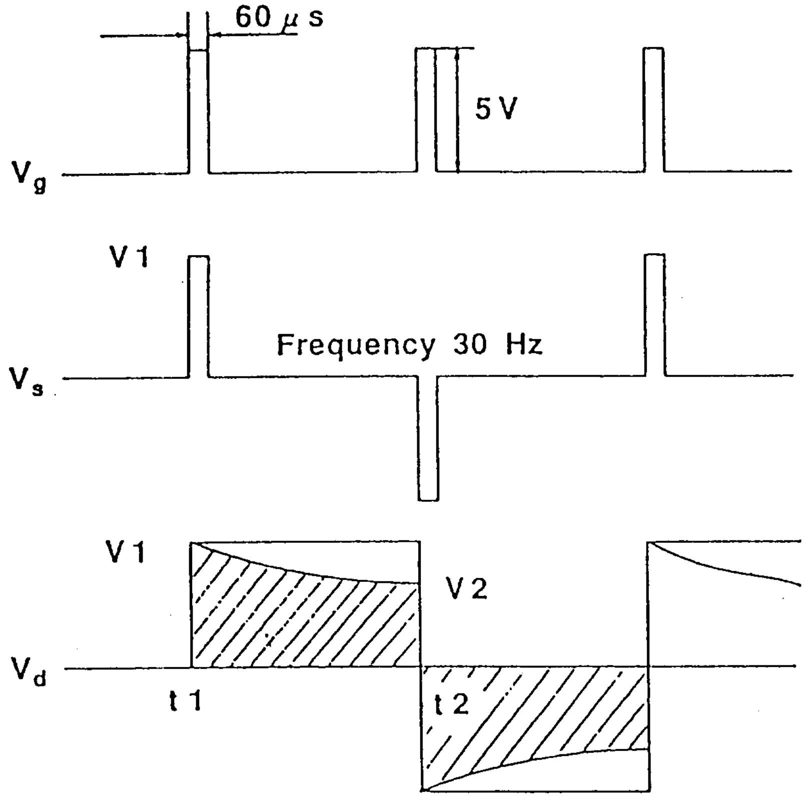


F I G . 3 Wave-form at measurement of retention

# INTERNATIONAL SEARCH REPORT

International application No.
PCT/JP93/01106

A. CLASSIFICATION OF SUBJECT MATTER

Int. $Cl^5$ C09K19/42, C09K19/08

According to International Patent Classification (IPC) or to both national classification and IPC

B. FIELDS SEARCHED

Minimum documentation searched (classification system followed by classification symbols)

Int. $Cl^5$ C09K19/08-19/34, C09K19/42-19/46

Documentation searched other than minimum documentation to the extent that such documents are included in the fields searched

Electronic data base consulted during the international search (name of data base and, where practicable, search terms used)

CAS ONLINE

C. DOCUMENTS CONSIDERED TO BE RELEVANT

| Category* | Citation of document, with indication, where appropriate, of the relevant passages | Relevant to claim No. |
|---|---|---|
| X | WO, A1, 91/15555 (Merck Patent GmbH), October 17, 1991 (17. 10. 91), & JP, A, 5-500679 | 1-5 |
| Y | DE, A1, 4106345 (Merck Patent GmbH), September 26, 1991 (26. 09. 91), (Family: none) | 1-5 |
| Y | DE, A1, 4027840 (Merck Patent GmbH), March 7, 1991 (07. 03. 91), & JP, A, 4-501575 | 1-5 |
| Y | JP, A, 2-233626 (Chisso Corp.), September 17, 1990 (17. 09. 90), & EP, A1, 387032 | 1-5 |
| Y | DE, A, 4111990 (Merck Patent GmbH), October 24, 1991 (24. 10. 91), & JP, A, 4-234828 | 1-5 |
| E | GB, A, 2253403 (Merck Patent GmbH), | 1-5 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| October 22, 1993 (22. 10. 93) | November 9, 1993 (09. 11. 93) |
| Name and mailing address of the ISA/ Japanese Patent Office | Authorized officer |
| Facsimile No. | Telephone No. |

## INTERNATIONAL SEARCH REPORT

International application No.
PCT/JP93/01106

C (Continuation). DOCUMENTS CONSIDERED TO BE RELEVANT

| Category* | Citation of document, with indication, where appropriate, of the relevant passages | Relevant to claim No. |
|---|---|---|
| | September 9, 1992 (09. 09. 92), (Family: none) | |
| E | JP, A, 5-105876 (Sharp Corp.), April 27, 1993 (27. 04. 93), & EP, A1, 502407 | 1-5 |